# EUROPEAN PATENT SPECIFICATION

(11) **EP 3 023 991 B1**
(45) Date of publication and mention of the grant of the patent: **01.05.2019**
(21) Application number: 14825637.3
(22) Date of filing: 18.07.2014
(51) Int. Cl.: G21B 3/00

(54) **HEATING DEVICE, AND HEATING METHOD**
ERWÄRMUNGSVORRICHTUNG UND ERWÄRMUNGSVERFAHREN
DISPOSITIF DE CHAUFFAGE, ET PROCÉDÉ DE CHAUFFAGE

(30) Priority: 18.07.2013 JP 2013148987; 17.03.2014 JP 2014053445
(43) Date of publication of application: 25.05.2016
(73) Proprietor: Hydrogen Engineering Application& Development Company, Sapporo-shi, Hokkaido 001-0012 (JP); Clean Planet Inc., Minato-ku Tokyo 105-0022 (JP)
(72) Inventor: MIZUNO Tadahiko, Sapporo-shi Hokkaido 065-0016 (JP)
(74) Representative: Beetz & Partner mbB
(86) International application number: PCT/JP2014/069198
(87) International publication number: WO 2015/008859

(56) References cited:
- WO-A1-96/35215
- WO-A1-2010/058288
- WO-A1-2012/011499
- WO-A2-2006/119080
- WO-A2-2013/076378
- JP-A- H04 212 092
- JP-A- H05 507 151
- JP-A- 2004 077 200
- JP-A- 2004 077 200
- JP-A- 2008 202 942
- JP-A- 2008 202 942
- JP-A- 2008 261 868
- JP-A- 2012 510 050
- JP-A- 2014 037 996
- US-A- 5 348 629
- US-A1- 2005 129 160
- US-A1- 2009 116 604
- US-A1- 2013 044 847

## Description

### Technical Field

The present invention relates to a heat-generating device and a heat-generating method. A heat-generating device and a heat-generating method as described in the preamble portions of patent claims 1 and 5, respectively, have been known from US 2009/116604 A1.

### Background Art

A collaborative research team of professor Fleischmann and professor Pons announced that the team had succeeded in causing a nuclear fusion reaction at room temperature in 1989 (refer to M. Fleischmann and S. Pons, J. Electroanalytical Chem., 261, P301 (1989)). According to this announcement, a cold nuclear fusion reaction which causes a nuclear fusion reaction at room temperature is a phenomenon in which when heavy water is electrolyzed with the use of a Pd electrode or a Ti electrode as a cathode and a Pt electrode as an anode, heat is generated which is equal to or more than a heat that is generated by the electrolysis, and simultaneously γ rays and neutrons can be observed. Such a cold nuclear fusion reaction generates unusually excess heat in the reaction time, and accordingly, if this exothermic phenomenon can be controlled, this exothermic phenomenon can be used also as a heat source of the heat-generating device.

US 2009/116604 A1 discloses a heat-generating device comprising: a reactor, a wound type reactant installed in the reactor, the wound type reactant having a structure in which a thin wire which is formed from a hydrogen storage metal is wound around a supporting part; a heater heating the wound type reactant, an evacuation unit by which a gas in the reactor is exhausted to the outside, and a gas supply unit supplying any of a deuterium gas, a heavy water gas, a protium gas and a light water gas as a reactant gas into the reactor; wherein the wound type reactant works as an electrode for generating a plasma in the reactor.

US 5 348 629 A discloses the use of cathodes formed from mesh and various nano-metric ridges, valleys and other shapes having protrusions in order to create localized zones at a cathode surface for enhancing cation migration in an electric field.

WO 2010/058288 discloses an apparatus and method for producing energy by employing nanometric clusters of a transition metal.

### Summary of Invention

### Technical Problem

However, actually, as for such a cold nuclear fusion reaction, the mechanism is not elucidated, the reproducibility is also poor, and the exothermic phenomenon cannot stably occur. Because of this, when it is intended to use such a cold nuclear fusion reaction as the heat source of the heat-generating device, there has been a problem that the probability of occurrence of the exothermic phenomenon is very low and the cold nuclear fusion reaction cannot stably generate heat.

Then, the present invention is designed with respect to the above described problem, and is directed at providing a heat-generating device and a heat-generating method, which can generate heat more stable than conventionally possible.

### Solution to Problem

This object is accomplished with a heat-generating device and a heat-generating method having the features of claims 1 and 5, respectively.

Dependent claims are directed on features of preferred embodiments of the invention.

### Advantageous Effects of Invention

According to the present invention as set forth in Claim 1 and Claim 5, respectively, hydrogen atoms are occluded in the metal nano-protrusions of the reactant, electrons in the metal nano-protrusions act as heavy electrons by being strongly influenced by surrounding metal atoms and/or other electrons, as a result, an internuclear distance between the hydrogen atoms in the metal nano-protrusion is diminished, the probability at which a tunnel nuclear fusion reaction occurs can be raised, and thus, heat can be generated more stable than conventionally possible.

### Brief Description of Drawings

FIG. 1 is a schematic diagram showing a configuration of a heat-generating device of a first embodiment according to the present disclosure.
FIG. 2 is a schematic diagram showing a cross-sectional configuration of an inside of a reactor.
FIG. 3 is a graph which shows a measurement result of neutrons in the heat-generating device according to a first embodiment.
FIG. 4 is a graph which shows a result of a temperature measurement of the heat-generating device according to the first embodiment.
FIG. 5 is a schematic diagram showing a configuration of a heat-generating device according to an embodiment of the present invention.
FIG. 6A is a SEM photograph which shows a state of the surface of a reactant prior to plasma treatment; and FIG. 6B is a SEM photograph which shows a state of the surface of a wound type reactant prior to the plasma treatment.
FIG. 7 is a SEM photograph which shows a state of the surface of the reactant after the plasma treatment.
FIG. 8 is a SEM photograph which shows a state of the surface of the wound type reactant after the plasma treatment.
FIG. 9A and FIG. 9B show SEM photographs in which the surface of the wound type reactant is expanded.
FIG. 10 is a graph showing a voltage which has been applied to the wound type reactant, in the verification test using the heat-generating device according to the above embodiment.
FIG. 11 is a graph showing a result of a temperature measurement of the wound type reactant, in the verification test using the heat-generating device according to the above embodiment.
FIG. 12 is a schematic diagram showing the configuration of a heat-generating device according to the disclosure.
FIG. 13A ad FIG. 13B are schematic diagrams showing structures of reactants according to other embodiments.
FIG. 14A is a graph showing a mass distribution of a deuterium gas, and FIG. 14B is a graph showing gas components in a reactor on 10 ks after the verification test.
FIG. 15 is a graph showing the amount of increase and decrease of gas components with the elapse of time.
FIG. 16 is a graph in which the graph of FIG. 15 is partially expanded.

### Description of Embodiments

The embodiments of the present disclosure will be described below in detail with reference to the drawings.

### (1) First Embodiment

### (1-1) Whole structure of heat-generating device according to first embodiment

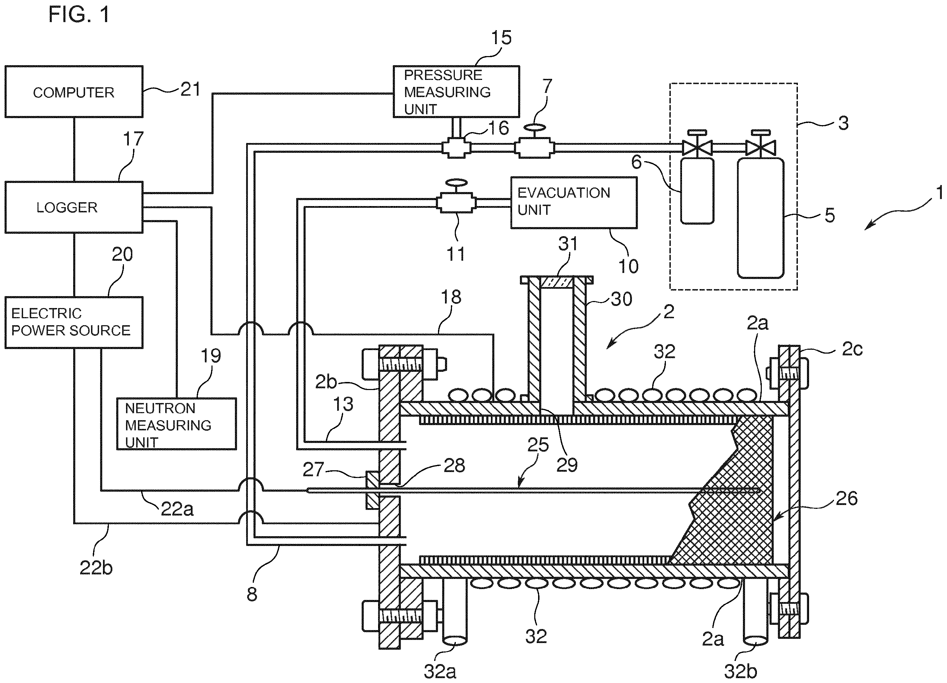

In Figure 1, reference numeral 1 denotes a heat-generating device according to a first embodiment, has a wound type reactant 25 and a reactant 26 provided in a reactor 2 as an electrode pair, and is configured so as to cause a nuclear fusion reaction at room temperature in the reactor 2, and thereby be capable of generating heat. In the case of this embodiment, in the reactor 2, a tubular heat transporting pipe 32 is spirally wound along an outer wall of the reactor 2. In the inside of the heat transporting pipe 32, a fluid such as water flows from a supply port 32a towards a discharge port 32b, and the fluid flowing in the heat transporting pipe 32 is heated by heat generated in the reactor, the heated fluid is discharged from the discharge port 32b in the state. The fluid is sent to, for instance, an unillustrated electric power plant and the like, and the heat of the fluid can be used for power generation and the like.

Here, a gas supply unit 3 is provided in the reactor 2, and a deuterium gas (purity of 99.99%) can be supplied into the reactor from the gas supply unit 3 through a gas supply pipe 8, as a reactant gas. The gas supply unit 3 has a deuterium gas cylinder 5 and a gas receiver 6, stores the high-pressure deuterium gas which has been discharged from the deuterium gas cylinder 5 in the gas receiver 6, then decompresses the deuterium gas to approximately 1 atmosphere, and can supply the decompressed deuterium gas into the reactor 2. Here, in the gas supply pipe 8, an open/close valve 7 is provided, and a pressure measuring unit 15 is also provided through a branch portion 16. In the reactor 2, the opening and closing and the amount of the opening and closing of the open/close valve 7 are controlled, and thereby the amount of supply of the deuterium gas into the reactor can be controlled. The pressure measuring unit 15 which is provided in the gas supply pipe 8 can measure a pressure in the gas supply pipe 8, and can send pressure measurement data obtained by the measurement to a logger 17, as a pressure in the reactor 2.

In addition, an evacuation unit 10 is provided in the reactor 2 through an evacuation pipe 13. In the reactor 2, a gas in the reactor is exhausted to the outside by the evacuation unit 10, the inside of the reactor can become a vacuum atmosphere, an open/close valve 11 which is provided on the evacuation pipe 13 is closed, and the inside of the reactor can be held in a vacuum state. At this time, the deuterium gas is supplied into the reactor 2 from the gas supply unit 3, and thereby the reactor can become such a state that the inside of the reactor, in which the vacuum state has been kept, is filled with the deuterium gas.

Incidentally, in the reactor 2, a thermocouple 18 for measuring the temperature of the reactor 2 is provided on the outer wall surface of the reactor 2. In addition, a neutron measuring unit 19 which measures a neutron that is radiated from the reactor 2 is arranged outside of the reactor 2. These thermocouple 18 and neutron measuring unit 19 are connected to the logger 17; and the logger 17 collects the measurement data of the temperature obtained from the thermocouple 18, the measurement data of the neutron obtained from the neutron measuring unit 19, and besides the measurement data of the pressure obtained from the above described pressure measuring unit 15, and can send out these data to a computer 21. The computer 21 is configured so as to display these data collected through the logger 17 onto a display, for instance, and to be capable of making an operator grasp the state in the reactor 2 on the basis of the data.

Here, the reactor 2 has a cylindrical portion 2a which is formed, for instance, from stainless steel (SUS306 or SUS316) and the like, and wall parts 2b and 2c which are similarly formed from stainless steel (SUS306 or SUS316) and the like; the opening portions of both ends of the cylindrical portion 2a are blocked by wall parts 2b and 2c through a gasket (unillustrated); and an enclosed space can be formed by the cylindrical portion 2a and the wall parts 2b and 2c. In the case of this embodiment, the cylindrical portion 2a has an opening portion 29 drilled on the side face part, and one end of an opening visual recognition portion 30 is bonded to the side face part so that a hollow region of the cylindrical opening visual recognition portion 30 which is formed, for instance, stainless steel (SUS306 and SUS316) and the like communicates with the opening portion 29. This opening visual recognition portion 30 has a window portion 31 fitted in the other end, which is formed of transparent members such as Kovar-glass, and is structured so that the operator can directly visually recognize the state in the reactor 2 from the window portion 31 through the hollow region and the opening portion 29, while maintaining the sealed state in the reactor. Incidentally, in the case of this embodiment, in the reactor 2, the cylindrical portion 2a is formed to be a cylindrical shape, a whole length (between wall parts 2b and 2c) is selected to be 300 mm, and an outer diameter of the cylindrical portion 2a is selected to be 110 mm, for instance.

In addition to this structure, in the inside of this reactor 2, the electrode pair formed of the wound type reactant 25 and the reactant 26 is arranged, and is configured so as to be capable of generating plasma by a glow discharge which is generated by the electrode pair. Practically, in the reactor 2, one wall part 2b has an opening portion 28 drilled therein, a wound type reactant 25 having a rod shape is inserted in the opening portion 28, and the wound type reactant 25 can be arranged in the reactor. Practically, in the wall part 2b, an insulating member 27 which is provided in the opening portion 28 blocks the opening portion 28, also holds the wound type reactant 25 by the insulating member 27 so that the wound type reactant 25 does not come in contact with the opening portion 28, and electrically insulates the wound type reactant 25 from the reactor 2, while maintaining the hermetically-closed state in the reactor 2.

In the case of this embodiment, one end of the wound type reactant 25 is exposed from the opening portion 28 of the wall part 2b to the outside of the reactor 2, an electric power source 20 is connected to the one end through a wire 22a, and voltage can be applied from the electric power source 20. This electric power source 20 has further another wire 22b, the wire 22b is connected to the wall part 2b of the reactor 2, and voltage can be applied also to the reactor 2. This electric power source 20 is connected to the computer 21 through the logger 17, an output voltage and the like are collected by the logger 17, the collected voltage is sent out to the computer 21, and the output voltage and the like are controlled by the computer 21.

In addition to this structure, the reactor 2 has a structure in which the reactant 26 is arranged so as to come in contact with the inner wall surface of the cylindrical portion 2a, and can apply a voltage supplied from the electric power source 20 to the reactant 26 through the cylindrical portion 2a. Thereby, the wound type reactant 25 and the reactant 26 can generate the glow discharge in the reactor 2, due to the voltage which is applied from the electric power source 20.

Practically, in the case of this embodiment, the reactant 26 is formed from a hydrogen storage metal which includes, for instance, Ni, Pd, Pt, Ti and an alloy containing at least any one element of these elements so as to be a cylindrical shape, is arranged along the inner wall of the reactor 2, and can be installed so that the outer surface covers the inner wall of the cylindrical portion 2a of the reactor 2. The reactant 26 is structured so as to cover the inner wall of the cylindrical portion 2a in the reactor 2, and thereby be capable of suppressing an occurrence that elements (for instance, in case of cylindrical portion 2a of stainless steel, elements such as iron, light elements, oxygen, nitrogen and carbon) are emitted from the inside of the cylindrical portion 2a into the reactor, by irradiation of the cylindrical portion 2a with electrons, when the plasma is generated by the electrode pair.

In addition to the structure, this reactant 26 has a reticulated shape formed of a thin wire on the surface, further has a plurality of metal nanoparticles (unillustrated) having a nano-size with a width of 1000 nm or smaller formed on the surface of the thin wire, and the surface is formed to become an uneven state. In the reactant 26, when the plasma is generated by the glow discharge in the deuterium gas atmosphere in the reactor by the wound type reactant 25 and the reactant 26 (in exothermic reaction process which will be described later), the surface oxide layer is desirably removed by the plasma treatment and the like beforehand so that hydrogen atoms (deuterium atom) can be occluded in the metal nanoparticle, and the surface metal nanoparticle becomes desirably an activated state.

Here, the plurality of metal nanoparticles having the nano-size are formed on the surface of the reactant 26 which works as an electrode; and thereby, when the glow discharge is generated in the deuterium gas atmosphere by the wound type reactant 25 and the reactant 26, hydrogen atoms are occluded in the metal nanoparticle, and electrons in the nano-sized metal nanoparticle is strongly influenced by surrounding metal atoms and other electrons, and act as heavy electrons. As a result, an internuclear distance between the hydrogen atoms in the metal nanoparticle is shrunk, and a nuclear fusion reaction can be caused which generates heat while emitting neutrons in the reactor 2.

Incidentally, in this embodiment, after the reactant 26 has been installed in the reactor 2, a plurality of metal nanoparticles having the nano-size are formed on the surface of the reactant 26, by being submitted to plasma treatment which will be described later, but the present invention is not limited to this. It is also acceptable to form a plurality of metal nanoparticles having the nano-size on the surface of the reactant 26 beforehand, by performing a sputtering treatment, an etching treatment or the like on the reactant 26, before the reactant 26 is installed in the reactor 2, and to install the reactant 26 which has the metal nanoparticles formed on the surface, in the reactor 2. However, even in this case, it is necessary to perform the plasma treatment which will be described later, remove the surface oxide layer of the reactant 26, and convert the metal nanoparticle on the surface into an activated state so that hydrogen atoms can be occluded in a metal nanoparticle when the plasma due to the glow discharge has been generated in the reactor by the wound type reactant 25 and the reactant 26 in the deuterium gas atmosphere.

Practically, on the surface of the reactant 26, a plurality of metal nanoparticles are formed which have a curved surface and show such a shape that a part of a spherical particle, an elliptical particle or an egg-shaped particle is embedded (for instance, hemispherical shape, half-elliptic shape or half-egg shape) in the surface. In addition, in the case of this embodiment, on the surface of the reactant 26, metal nanoparticles are formed so as to come in contact with each other, and a plurality of metal nanoparticles are formed so as to be densely packed. In addition, among the metal nanoparticles, there is even a metal nanoparticle which has a fine metal nanoparticle with a width (particle diameter) of 1 to 10 nm further formed on the curved surface of the metal nanoparticle, and the uneven surface which has a plurality of metal nanoparticles thereon can be formed so as to be dotted with the fine metal nanoparticles having the width of 1 to 10 nm.

Such a metal nanoparticle is formed desirably so as to have a nano-size with the width of 1000 nm or smaller, preferably of 300 nm or smaller, more preferably of 10 nm or smaller, and further preferably of 5 nm or smaller. When the width of metal nanoparticle is reduced, it can be facilitated that the nuclear fusion reaction occurs in the reactor 2 by a small amount of the deuterium gas to be supplied.

Here, the size of such a metal nanoparticle has been further theoretically analyzed with the use of the theoretical calculation which shows the probability of the occurrence of the nuclear fusion reaction, and then the width (particle diameter) of the metal nanoparticle is most preferably 1 to 10 nm; and the fine metal nanoparticles are desirably formed so as to be spaced at such a distance that the fine metal nanoparticles do not come in contact with each other by a thermal movement, and preferably at a distance of 3 times or more of the particle diameter. In this case, it is preferable that the surface of the reactant 26 has the fine metal nanoparticles of, for instance, 4×10⁸ per 1 cm² formed thereon, which have the width (particle diameter) of 1 to 10 nm, while being dotted with the fine metal nanoparticles.

In the case of this embodiment, when the thickness of the reactant 26 exceeds 1.0 mm, the nano-sized fine metal nanoparticles resist being formed on the surface, and accordingly in order that the nano-sized metal nanoparticles are formed on the surface, it is desirable that the thickness is 1.0 mm or less, more preferably is 0.3 mm or less, and further preferably is 0.1 mm or less. In addition, in the case of this embodiment, the reactant 26 is formed of the thin wire to have a reticulated shape, accordingly can form the thickness thin easily with the use of a thin wire having a small diameter, and can also increase the surface area of the surface on which the metal nanoparticles are formed. As for the surface of the reactant 26, a width of one block of the net is desirably selected to be 10 to 30 mm.

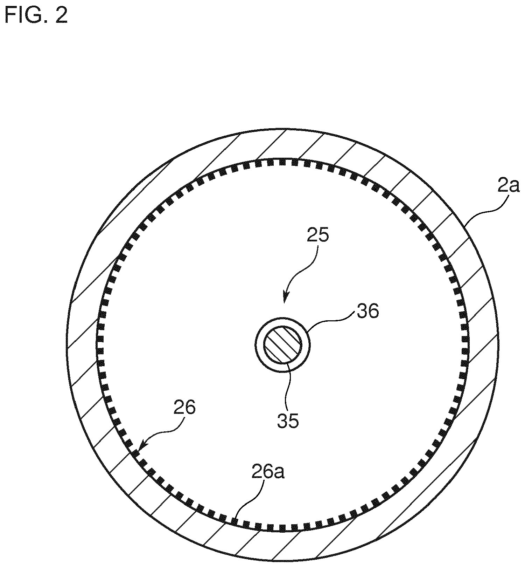

As is shown in Figure 2, the wound type reactant 25 which constitutes the electrode pair together with the reactant 26 has a structure in which a thin wire 36 which is formed from a hydrogen storage metal, for instance, including Pt, Ni, Pd, Ti and an alloy containing at least one element among the elements is spirally wound around a perimeter of a shaft part 35 which is a supporting part and is similarly formed from the hydrogen storage metal including Pt, Ni, Pd, Ti or the alloy containing at least one element among the elements, and the shaft part 35 is arranged on the central axis of the cylindrical portion 2a. In addition, a distance between the wound type reactant 25 and the reactant 26 can be selected to be 10 to 50 mm. In the case of this embodiment, the wound type reactant 25 is formed of the shaft part 35 which has a diameter of 3 mm and a length of 200 mm and is formed from Ni, and of the thin wire 36 which has a diameter of 1.0 mm and is formed from Pt, and the distance between the thin wire 36 and the reactant 26 is selected to be 50 mm.

Incidentally, in the above described embodiment, the surface of the reactant 26 receives attention, and the case is described where a plurality of metal nanoparticles having the nano-size are formed on the surface of the reactant 26, but such a plurality of metal nanoparticles having the nano-size are formed also on the thin wire 36 of the wound type reactant 25. Practically, in the case of this embodiment, the wound type reactant 25 is formed from a hydrogen storage metal, and accordingly the plurality of metal nanoparticles having the nano-size are formed on the surface of thin wire 36. Thereby, when the plasma is generated by the wound type reactant 25 and the reactant 26 in the deuterium gas atmosphere, hydrogen atoms are occluded also in the metal nanoparticle of the wound-type reactant 25, and the electrons (free electron) in the nano-sized metal nanoparticle are strongly influenced by surrounding metal atoms and other electrons, and act as heavy electrons. As a result, an internuclear distance between the hydrogen atoms in the metal nanoparticle is shrunk, and the nuclear fusion reaction can be caused which generates heat while emitting neutrons in the reactor 2.

### (1-2) Plasma treatment

Here, the heat-generating device 1 of the present disclosure is configured to be capable of forming a plurality of metal nanoparticles having the nano-size on the surface of the above described reactant 26 and wound type reactant 25, and also performing plasma treatment which activates the surfaces of the reactant 26 and the wound type reactant 25. Practically, when the reactant and the wound type reactant which do not have the metal nanoparticles formed on the surface are provided in the reactor 2, for instance, the heat-generating device 1 firstly evacuates a gas in the reactor 2 which is an enclosed space, and then sets a pressure in the reactor at 10 to 500 Pa (for instance, approximately 100 Pa), as the plasma treatment.

In this state, the heat-generating device 1 sets the wound type reactant 25 as an anode, sets the reactant 26 as a cathode, and applies a voltage of 600 to 1000 V (for instance, approximately 1000 V) to the electrode pair, for instance, causes the glow discharge, and generates the plasma in the reactor 2. In this case, the temperature of the reactant 26 which has been set as the cathode can rise to 500 to 600 °C, for instance. The heat-generating device 1 continuously causes the glow discharge for 600 seconds to 100 hours (preferably 10 hours or more) in such a vacuum atmosphere, thereby can form a plurality of metal nanoparticles having the nano-size on the surfaces of the reactant 26 and the wound type reactant 25, can remove the oxide layer on the surfaces of these reactants 26 and the wound type reactant 25, and can activate the surfaces.

Incidentally, the plasma treatment may generate the plasma not only by setting the wound type reactant 25 as the anode and setting the reactant 26 as the cathode, as has been described above, but also may subsequently generate the plasma after that, by reversing polarities of the wound type reactant 25 and the reactant 26, setting the wound type reactant 25 as the cathode and setting the reactant 26 as the anode. Thus, also when the glow discharge is caused by the wound type reactant 25 set as the cathode and the reactant 26 set as the anode, it is desirable to apply the voltage of 600 to 1000 V (for instance, approximately 1000 V) to the electrode pair, and to continuously cause the glow discharge for 600 seconds to 100 hours (preferably 10 hours or more). Thereby, in both of the wound type reactant 25 set as the cathode and the reactant 26 set as the anode, temperatures rise, for instance, to 500 to 600 °C, and the surfaces can be surely activated.

The heat-generating device 1 desirably performs heating treatment on the wound type reactant 25 and the reactant 26, after having performed the above described plasma treatment. This heating treatment can make the wound type reactant 25 and the reactant 26 emit protium, H₂O and a hydrocarbon gas, for instance, by directly heating the wound type reactant 25 and the reactant 26 with a heater, and can facilitate hydrogen atoms to be occluded. Such heating treatment is desirably performed until the wound type reactant 25 and the reactant 26 no longer emit protium, H₂O and the hydrocarbon gas, and is desirably performed at 100 to 200 °C for 3 hours or longer, for instance.

Here, if the surface of the reactant 26 has been previously submitted to acid pickling treatment of immersing a metal in aqua regia or mixed acid at room temperature for several minutes, before the metal nanoparticles are formed thereon, remarkably finer metal nanoparticles can be formed on the surface at the time of the plasma treatment.

### (1-3) Exothermic reaction process

Subsequently, the heat-generating device 1 can perform an exothermic reaction process which causes a nuclear fusion reaction in the reactor 2, by using the reactant 26 which has such a plurality of metal nanoparticles having the nano-size formed on the surface. In the case of this embodiment, in the heat-generating device 1, sequentially to the above described plasma treatment, the deuterium gas can be supplied into the reactor 2 by the gas supply unit 3, while the inside of reactor 2 is kept in the vacuum state, as the exothermic reaction process.

Subsequently, in the reactor 2 which becomes the deuterium gas atmosphere, the heat-generating device 1 can generate the plasma in the reactor 2, by applying a voltage of 400 to 1500 V, preferably 600 to 1000 V, more preferably 700 to 800 V to the wound type reactant 25 and the reactant 26, and causing the glow discharge in the electrode pair. Thereby, while the heat-generating device 1 generates the plasma in the reactor 2, hydrogen atom are occluded in the metal nanoparticles on the surfaces of the wound type reactant 25 and the reactant 26, and the nuclear fusion reaction can occur.

Here, in the heat-generating device 1 of the present disclosure, when the plasma is generated in the reactor 2 in the exothermic reaction process, the nuclear fusion reaction occurs in the reactor 2, but at this time, a fine metal nanoparticle is newly formed on the surfaces of the reactant 26 and the wound type reactant 25, hydrogen atoms are occluded also in the metal nanoparticle which is newly formed, and a nuclear fusion reaction can occur.

### (1-4) Outline of nuclear fusion reaction in heat-generating device according to the present disclosure

Here, the reactant 26 shall receive attention, and such an outline will be briefly described below that the nuclear fusion reaction occurs easily by that a plurality of metal nanoparticles having the nano-size has been formed on the surface of the reactant 26. Generally, a neutron and the like are not radiated and heat is not generated by irradiation of metal with electrons. However, in the metal nanoparticle having a certain size or smaller as the nano-size, an electron acts as a heavy fermion (heavy electron), makes hydrogen atoms approach to each other, and causes the nuclear fusion reaction. Usually, in the case of deuterium, an energy of 10⁷K=1keV or more is required in order to cause the nuclear fusion reaction. In order to give such large energy by temperature, in the case of deuterium, for instance, a high temperature of approximately 10⁷K or higher is required, and in the case of protium, a high temperature of approximately 1.5×10⁷K or higher is required; and a probability of occurrence of the nuclear fusion is as extremely low as 10⁻³¹ / s / atom pair.

However, when a plurality of metal nanoparticles (metal nano-protrusion) having the nano-size are formed on the surface of the reactant 26 as in the present disclosure, an electron is strongly influenced by the surrounding metal atom or another electron in the metal nanoparticle. Specifically, when hydrogen atoms are introduced into the metal nanoparticle, a concentration of hydrogen in the metal nanoparticle increases, and when the concentration of hydrogen increases, the property of the electron in the metal nanoparticle further changes; and a mass of the electron becomes a large value. The heavy electron forms an atom with a hydrogen nucleus, and when the heavy electron becomes an extranuclear electron, a radius of an electron orbit shrinks, and the internuclear distance between heavy electron hydrogen atoms also shrinks. As a result, the probability of the occurrence of the nuclear fusion reaction between the heavy electron hydrogen atoms increases due to the tunnel effect in the reactant 26, and it is facilitated that the nuclear fusion reaction occurs. For instance, in the case of the metal nanoparticle formed from Pd, when the mass of an electron increases to twice, the probability of the occurrence of the nuclear fusion reaction due to the tunnel effect increases by 10 digits, and it can be facilitated that the nuclear fusion reaction occurs.

The reactant 26 may have atoms of, for instance, an alkaline group or an alkaline earth group (for instance, Li, Na, K, Ca and the like which have hydrogen atom structure) attached to the surface of the metal nanoparticle, in order to increase the probability of the occurrence of the nuclear fusion reaction between the heavy electron hydrogen atoms. Thereby, a transfer action of the electron in the metal nanoparticle can be extremely increased, and the probability of the occurrence of the nuclear fusion reaction can be further increased. The heat-generating device 1 of the present invention stably causes the nuclear fusion reaction in this way, and can stably generate heat by the large energy which is generated in the nuclear fusion reaction.

### (1-5) Verification test

Next, the heat-generating device 1 as shown in Figure 1 was prepared, and the above described plasma treatment and exothermic reaction process were performed; and the neutron was measured in the perimeter of the reactor 2 and a temperature of the reactor 2 was measured. Here, firstly, a reactant formed from Ni (purity of 99.9%) which did not have a plurality of metal nanoparticles having the nano-size formed thereon was prepared, and the reactant was installed in the reactor 2. Subsequently, in order that the plasma treatment was performed, the inside of the reactor 2 was evacuated by the evacuation unit 10, and a pressure in the reactor 2 was controlled to approximately 10⁻⁶ atmospheres.

Subsequently, the voltage of 1 kV was applied to the wound type reactant 25 and the reactant 26 in this state to have generated the glow discharge, and the glow discharge was continued to have been generated in the reactor 2 for 30 hours. After that, at this time point, the reactant 26 was taken out from the reactor 2 and the surface state of the reactant 26 was checked with an SEM photograph and the like. Then, it was confirmed that a plurality of metal nanoparticles having the nano-size with a particle diameter of 1000 nm or smaller were densely formed and the surface became uneven.

Aside from the above reactant, in order that the exothermic reaction process is performed, the reactant 26 was left in the reactor 2, 1 kV was applied to the electrode pair as described above, and the glow discharge was continued to have been generated. Then, the pressure in the reactor 2 was set at approximately 10⁻⁶ atmospheres, and the deuterium gas was supplied to the reactor 2 at a gas pressure of 10⁻² atmospheres, by the gas supply unit 3. Thereby, in the heat-generating device 1, the neutron was measured after 1 to 2 minutes, with the neutron measuring unit 19.

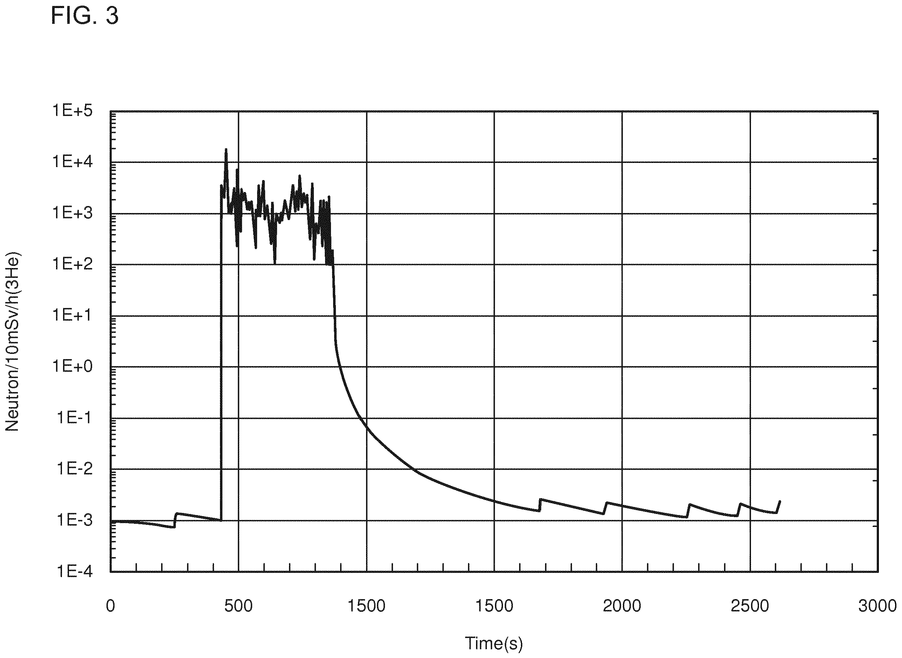

Subsequently, the glow discharge was once stopped, and after the deuterium gas was supplied into the reactor 2, the electrode pair was fully cooled. Then, the voltage of 1 kV was applied to the electrode pair again, and the glow discharge was generated. Thereby, the neutron measuring unit 19 started to measure the neutron again, and after this, measured the neutron continuously for several hours. Here, the measurement result of the neutron is shown in Figure 3. As is shown in Figure 3, in this heat-generating device 1, the neutron was generated suddenly after the voltage was supplied to an electrode pair in order to cause the glow discharge, and accordingly it could be assumed that the nuclear fusion reaction accompanied by the generation of the neutron occurred in the reactor 2. It was also confirmed that the number of such neutrons to be generated could be controlled by a discharge voltage of the electrode pair, and the number of the neutrons to be generated increased with the exponential function of the voltage. The neutrons were stably generated by the supply of the voltage, and the neutrons of 10⁶ were obtained. The amount of the neutrons generated per unit area of the reactant 26 when the exothermic reaction was continued for 200 seconds was calculated, and the value was 10⁵ neutrons.

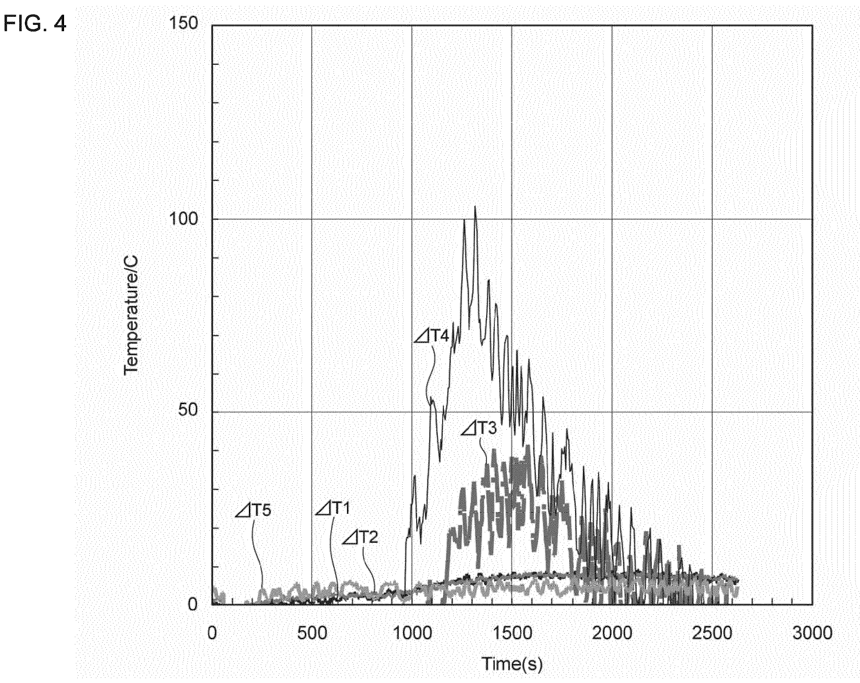

In addition, the temperature of the reactor 2 was measured with the thermocouple 18 at the same time when the neutron was measured, and a result shown in Figure 4 was obtained. From Figure 4, it was confirmed that the temperature of the reactor 2 rose after the neutron was generated, and it was confirmed from the above that this heat-generating device 1 could generate heat from the reactor 2. The reason that the temperature rise was measured behind the generation of the neutron is because the area in which heat was generated deviated from the place at which the thermocouple 18 was set, and because a delay occurred in the temperature rise by a period needed for the thermal conduction. In Figure 4, ΔT1 to ΔT5 show the spots which were provided at predetermined spaces along the cylindrical portion 2a of the reactor 2. Incidentally, the electric current which flowed in the electrode pair at this time was 30 mA. In other words, an electric power becomes 30 W. The amount of heat generated by the above input became 1 kW, and the heating value with respect to the input reached 33 times.

### (1-6) Operation and Effect

In the above configuration, in the heat-generating device 1 according to the present disclosure, the reactant 26 was provided in the reactor 2, which had a plurality of metal nanoparticles formed on the surface, which had each the nano-size of 1000 nm or smaller and were formed from a hydrogen storage metal; and the exothermic reaction process was performed which generated the plasma by the wound type reactant 25 and the reactant 26 in the reactor 2 that became the deuterium gas atmosphere, and gave energy. Thereby, in the heat-generating device 1, hydrogen atoms are occluded in the metal nanoparticle of the reactant 26; and the electrons in the metal nanoparticle are strongly influenced by surrounding metal atoms and other electrons, and act as heavy electrons. As a result, the internuclear distance between the hydrogen atoms in the metal nanoparticle is shrunk, and the probability of causing the tunnel nuclear fusion reaction can be raised.

In addition, in the heat-generating device 1, even when the reactant which does not have the metal nanoparticle formed on the surface is provided in the reactor 2, the reactant 26 can have a plurality of metal nanoparticles having the nano-size formed on the surface, by being submitted to the plasma treatment before being submitted to the exothermic reaction process, which sets the inside of the reactor 2 at a vacuum atmosphere, and generates the plasma in the reactor 2 by the glow discharge that occurs due to the wound type reactant 25 and the reactant. Furthermore, in the heat-generating device 1, the plasma treatment is performed prior to the exothermic reaction process, thereby the oxide layer on the surface of the reactant 26 can be removed. Thus, the surface of the reactant 26 can be converted into an activated state in which hydrogen atoms can be occluded in the metal nanoparticle of the reactant 26 in the exothermic reaction process, and the nuclear fusion reaction can be caused.

In addition, in the case of this embodiment, the reactant 26 is formed of the thin wire to have a reticulated shape, accordingly can make the thickness of the surface thin easily only by reducing the diameter of the thin wire, and can also control the thickness of the surface at such optimal thinness that a plurality of metal nanoparticles having the nano-size are easily formed on the surface. Furthermore, in the reactant 26, the surface is formed to have the reticulated shape, and thereby the surface area can be increased. Correspondingly, a region can be widened on which the metal nanoparticles that occlude hydrogen atoms therein are formed, and the reaction spots in which heat is generated can be increased.

In addition, the heat-generating device 1 is structured so that the voltage is applied to the reactor 2 from the electric power source 20 through the wire 22b, at the same time, the reactant 26 is brought into contact with the inner wall of the reactor 2, and the inner wall of the reactor 2 is covered by the reactant 26. Thereby, the reactant 26 works as an electrode, and at the same time, the reactant 26 can prevent the inner wall of the reactor 2 from being ground by electron irradiation due to glow discharge.

Furthermore, the heat-generating device 1 was structured so that a plurality of metal nanoparticles having the nano-size were formed also on the surface of the thin wire 36 of the wound type reactant 25, which was formed from the hydrogen storage metal. Thereby, in the heat-generating device 1, hydrogen atoms are occluded also in the metal nanoparticle on the surface of the thin wire 36 of the wound type reactant 25; and the electrons in the metal nanoparticle are strongly influenced by surrounding metal atoms and other electrons, and act as heavy electrons. As a result, the internuclear distance between the hydrogen atoms in the metal nanoparticle is shrunk, and the probability of causing the tunnel nuclear fusion reaction can be raised.

According to the above structure, the reactant 26 that has a plurality of metal nanoparticles (metal nano-protrusion) formed on the surface, each of which has the nano-size of 1000 nm or smaller and is formed from a hydrogen storage metal, is structured to be installed in the reactor that becomes the deuterium gas atmosphere. Thereby, hydrogen atoms are occluded in the metal nanoparticle of the reactant 26; and the electrons in the metal nanoparticle are strongly influenced by surrounding metal atoms and other electrons, and act as heavy electrons. As a result, the internuclear distance between the hydrogen atoms in the metal nanoparticle is shrunk, the probability of causing the tunnel nuclear fusion reaction can be raised, and thus heat can be generated more stable than conventionally possible.

### (2) Second embodiment

### (2-1) Structure of heat-generating device according to second embodiment

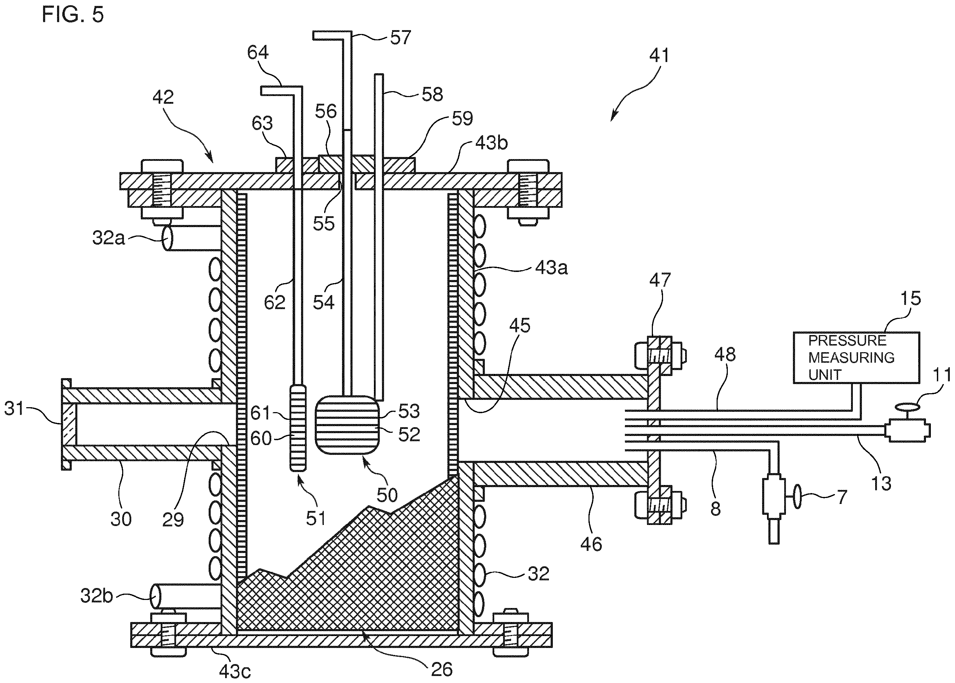

In Figure 5 in which the portions corresponding to those in Figure 1 are denoted by the same reference numerals and are shown, reference numeral 41 shows a heat-generating device according to a second embodiment which is different from the first embodiment in the structure of a reactor 42 and a structure of the electrode pair. In addition, this heat-generating device 41 according to the second embodiment is different from the above described heat-generating device according to the first embodiment, in a point that in the exothermic reaction process, the inside of the reactor 42 is heated by a heater without generating plasma therein by the electrode pair, the deuterium gas is supplied into the heated reactor 42, and thereby excess heat equal to or more than the heating temperature is generated. Furthermore, the second embodiment is different from the first embodiment also in the point that in this heat-generating device 41, when the plasma is generated by the electrode pair after the excess heat has been generated, the exothermic temperature further rises, and the heat of the high temperature due to the temperature rise can be continued to be generated as long as the deuterium gas is supplied into the reactor 42, even if the plasma is stopped.

As for the other structures, this heat-generating device 41 has the same structure as that in the above described first embodiment, and accordingly the illustration and the description of the gas supply unit 3, the evacuation unit 10, the electric power source 20 and the like will be omitted. Practically, in the case of this embodiment, the reactor 42 includes a cylindrical portion 43a which is formed from, for instance, stainless steel (SUS306 and SUS316) or the like, and wall parts 43b and 43c, wherein opening portions of both ends of the cylindrical portion 43a are blocked by the wall parts 43b and 43c through a gasket (unillustrated), and the cylindrical portion 43a and the wall parts 43b and 43c can form an enclosed space.

In this case, in the cylindrical portion 43a, another opening portion 45 is drilled on the side face part so as to face the opening portion 29 in which the opening visual recognition portion 30 is provided, and one end of a cylindrical pipe communicating portion 46 which is formed of, for instance, stainless steel (SUS306 and SUS316) or the like is bonded to the side face part so that a hollow region of the pipe communicating portion 46 communicates with the opening portion 45. A wall part 47 is provided in the other end of the pipe communicating portion 46; and the gas supply pipe 8, the evacuation pipe 13 and a pipe 48 for measuring a pressure are provided in the wall part 47 so that the insides of pipes of the gas supply pipe 8, the evacuation pipe 13 and the pipe 48 for measuring the pressure communicate with the inside of the reactor 42. The pressure measuring unit 15 is provided through the pipe 48 for measuring the pressure, and can measure the pressure in the reactor 42 through the pipe 48 for measuring the pressure.

In addition to this structure, in the inside of the reactor 42, an electrode pair formed of wound type reactants 50 and 51 is provided, and the reactant 26 is further provided so as to cover the inner wall of the cylindrical portion 43a of the reactor 42. In the case of this embodiment, the wound type reactants 50 and 51 are arranged in the reactor so as to face opening portions 29 and 45 which are drilled in the cylindrical portion 43a, and are structured so that the deuterium gas sent from the pipe communicating portion 46 which is provided in the opening portion 45 can be directly sprayed to the wound type reactants 50 and 51, and also the operator can directly recognize the state of the wound type reactants 50 and 51 visually from the hollow region of the opening visual recognition portion 30 which is provided in the opening portion 29.

Here, in the case of this embodiment, the heat-generating device 41 is different from the heat-generating device in the above described first embodiment, and is structured as follows: the reactant 26 does not work as the electrode; the wound type reactants 50 and 51 which are provided in the reactor 42 aside from the reactant 26 work as a cathode and an anode; and when the plasma treatment is performed, these wound type reactant 50 and 51 cause the glow discharge while working as the electrode pair, and can generate the plasma in the reactor. The reactant 26 has a structure similar to that in the above described first embodiment, and although not working as the electrode, has a plurality of metal nanoparticles having the nano-size formed on the surface, by the plasma treatment which uses the wound type reactants 50 and 51 as the electrode pair. (Here, the plasma treatment unit to evacuate gas in the reactor 42 which has been controlled to an enclosed space, set the pressure in the reactor to 10 to 500 Pa, apply a voltage of 600 to 1000 V to an electrode pair, cause the glow discharge for 600 seconds to 100 hours, and thereby raise the temperature of the reactant 26 to 500 to 600 °C.) Thereby, when the deuterium gas is supplied after the reactant has been heated by a heater, in the reactor 42 in which the vacuum state is kept, the metal nanoparticles can occlude hydrogen atoms and the nuclear fusion reaction can occur.

The wound type reactant 50 is provided at the head of an electrode holding portion 54, and can be arranged in the center of the reactor 42 by the electrode holding portion 54. The electrode holding portion 54 is connected to an unillustrated electric power source through an electrode introduction part 57, and can apply the voltage applied from the electric power source to the wound type reactant 50. The electrode holding portion 54 is inserted into the reactor 42 from the opening portion 55 which is drilled in the wall part 43b, is held by the insulating member 56 which is provided on the opening portion 55, and also is arranged so as not to come in contact with the wall part 43b due to the insulating member 56 in the opening portion 55, and is electrically insulated from the reactor 42. The wound type reactant 50 has a structure in which a thin wire 53 formed from a hydrogen storage metal which includes, for instance, Pd, Ti, Pt, Ni and an alloy containing at least any one element of these elements is spirally wound around a supporting part 52 which is formed of a conducting member of Al₂O₃ (alumina ceramics) or the like, and a plurality of metal nanoparticles having the nano-size can be formed on the surface of the thin wire 53 by the plasma treatment. Thereby, also on the wound type reactant 50, hydrogen atoms are occluded in these metal nanoparticles, when the wound type reactant 50 is heated by a heater in the reactor 42 in which the vacuum state is kept, and also the deuterium gas is supplied, and the nuclear fusion reaction can occur.

The size and the shape of the metal nanoparticle formed on the surface of the thin wire 53 in the wound type reactant 50 are the same as those of the metal nanoparticle formed on the surface of the reactant 26. Specifically, on the surface of the thin wire 53 on the wound type reactant 50, a plurality of metal nanoparticles can be formed which have a curved surface and show such a shape that a part of a spherical particle, an elliptical particle or an egg-shaped particle is embedded (for instance, hemispherical shape, half-elliptic shape or half-egg shape) in the surface.

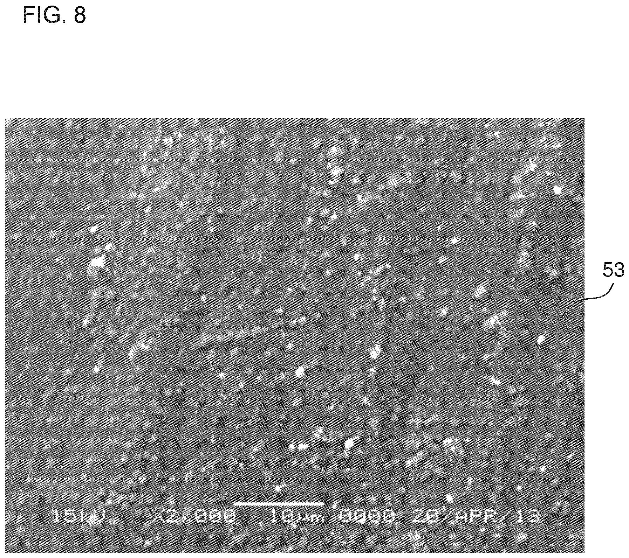

Incidentally, when the reactant 26 was formed from Ni and the thin wire 53 on the wound type reactant 50 was formed from Pd, the metal nanoparticles were formed so as to come in contact with each other on the surface of the thin wire 53 on the wound type reactant 50, though the number was not so many as that of the reactant 26 formed from Ni, and a region in which a plurality of metal nanoparticles were densely packed was also formed (shown in Figure 8 which will be described later). In addition, it is desirable that the metal nanoparticle which is formed on the surface of the thin wire 53 on the wound type reactant 50 is formed so as to have the nano-size with a width of 1000 nm or smaller, preferably of 300 nm or smaller, more preferably of 10 nm or smaller, and further preferably of 5 nm or smaller, similarly to the metal nanoparticle which is formed on the surface of the reactant 26. When the width of the metal nanoparticle is reduced, it can be facilitated that the nuclear fusion reaction occurs by a small amount of the deuterium gas to be supplied.

Even in this case, the metal nanoparticles having a width (particle diameter) of 1 to 10 nm are desirably formed on the surface of the thin wire 53 on the wound type reactant 50, similarly to the surface of the reactant 26, while such a distance that the fine metal nanoparticles do not come in contact with each other by a thermal movement, or preferably a distance of 3 times or more of the particle diameter is provided among the fine metal nanoparticles. In this case, the metal nanoparticles of, for instance, 4×10⁸ per 1 cm² are preferably formed on the surface of the reactant, and are desirably formed so as to be dotted with further fine metal nanoparticles.

In the reactor 42, a thermocouple 58 is arranged so as to come in contact with the supporting part 52 of the wound type reactant 50. Thereby, the wound type reactant 50 is structured so that the temperature is measured with the thermocouple 58 and an operator can check the temperature by a computer or the like, which is connected to thermocouple 58. In this case, the thermocouple 58 has such a structure that a K type thermocouple element is inserted in the inside of an alumina pipe, is held by an insulating member 59 in the wall part 43b, and is insulated from the reactor 42.

The wound type reactant 51 of the other side, which forms a pair with the wound type reactant 50, is provided on the head of an electrode holding portion 62, and is arranged in the reactor so as to face one wound type reactant 50 by the electrode holding portion 62. The electrode holding portion 62 is connected to an electrode introduction part 64 held by an insulating member 63 which is provided in the wall part 43b. The electrode introduction part 64 is connected to the unillustrated electric power source, and can apply a voltage applied from the electric power source to the wound type reactant 51 through the electrode holding portion 62. Thereby, the wound type reactant 51 can work as the cathode or the anode, when the voltage is applied from the electric power source.

The wound type reactant 51 has a structure in which a thin wire 61 that is formed from a hydrogen storage metal which includes, for instance, Pd, Ti, Pt, Ni and an alloy containing at least one element among the elements is spirally wound on a shaft part 60 that is similarly formed from the hydrogen storage metal which includes Pd, Ti, Pt, Ni and the alloy containing at least one element among the elements, and the basal portion of the shaft part 60 is attached to the head of the electrode holding portion 62. As for this wound type reactant 51 as well, a plurality of metal nanoparticles having the nano-size can be formed on the surface of the shaft part 60 and the thin wire 61 by the plasma treatment, similarly to the above described wound type reactant 50. Thus, also on the wound type reactant 51, hydrogen atoms are occluded in the metal nanoparticles formed on the surfaces of the shaft part 60 and the thin wire 61, when the deuterium gas is supplied into the reactor 42 in which the vacuum state is kept, and the nuclear fusion reaction can occur. The metal nanoparticles formed on the surfaces of the shaft part 60 and the thin wire 61 of the wound type reactant 51 have the same structure as the above described metal nanoparticles formed on the surface of the thin wire 53 of the wound type reactant 50, and the description shall be omitted here.

Thus, the heat-generating device 41 according to the second embodiment is structured as follows: a plurality of metal nanoparticles having the nano-size can be formed on the surfaces of the wound type reactant 50 and 51 and the reactant 26 by the plasma treatment; subsequently, when the deuterium gas is supplied to the inside of the reactor 42 in which the vacuum state is kept, in such a state that the wound type reactants 50 and 51 and the reactant 26 are heated by an unillustrated heater, hydrogen atoms are occluded in the metal nanoparticles on the surfaces of the wound type reactants 50 and 51 and the reactant 26; and as a result, a nuclear fusion reaction occurs in the reactor 42, and heat can be generated. Here, the heating temperature at which the wound type reactants 50 and 51 and the reactant 26 are heated by a heater is desirably 200 °C or higher, and further preferably is 250 °C or higher.

In addition, in the heat-generating device 41 according to this second embodiment, if the glow discharge is caused by the electrode pair and the plasma is generated at such a time when heat is generated in the reactor 42, the exothermic temperature further rises; and even if the plasma is stopped, the reactor 42 can continue to keep the state in which the temperature has risen, as long as the inside of the reactor 42 is kept at the deuterium gas atmosphere.

### (2-2) Verification test

Next, the verification test was performed with the use of the heat-generating device 41 shown in Figure 5, in order to check whether or not the reactor 42 generated heat. Here, the reactor 42 having a volume of 15 1 and a weight of 50 kg was formed from stainless steel (SUS306). In addition, in this verification test, the wound type reactant 50 was used which had the thin wire 53 that had a diameter of 0.1 mm and a length of 1000 mm and was formed from Pd (99.9% purity) wound 15 times, around the supporting part 52 that had a width of 30 mm and a thickness of 2 mm and was formed from Al₂O₃ (alumina ceramics); and the wound type reactant 51 was used which had the thin wire 61 that was formed from Pd (99.9% purity) and had a diameter of 1 mm and a length of 300 mm spirally wound without any gap, around the shaft part 60 that was formed from Pd (purity of 99.9%) and had a diameter of 3 mm and a length of 50 mm. In addition, in this verification test, the cylindrical reactant 26 was used of which the surface was formed in a reticulated shape by the thin wire that was formed from Ni (purity of 99.9%) and had a diameter of 0.1 mm.

Subsequently, these wound type reactants 50 and 51 and the reactant 26 were cleaned ultrasonically with an alcohol and acetone, and were installed in the reactor 42 while having kept the cleaned state so that contamination with oil did not occur. The whole of this reactor 42 is set at the ground potential. In addition, a K type and stainless steel cover type of a thermocouple which had a diameter of 1.6 mm and a length of 300 mm was used as the thermocouple 58 for directly measuring the temperature of the wound type reactant 50; the outside of the outer coating of the stainless steel was further insulated by an alumina pipe having a diameter of 3 mm and a length of 100 mm; and the head portion was brought into contact with the surface of the wound type reactant 50.

Then, first of all, as the plasma treatment, gas in the reactor 42 was gradually evacuated, the inside of the reactor 42 was controlled to a vacuum atmosphere of several Pa, then the wound type reactant 50 was set at the anode, the direct current voltage of 600 V was applied, and the electric discharge was generated by approximately 20 mA, for approximately 600 seconds. Next, the electrode voltage was changed, the wound type reactant 50 was set at the cathode, the direct current voltage of 600 V was applied, and the electric discharge was generated by approximately 20 mA, for approximately 1200 seconds. This process was repeated 5 times, then the reactant 26 and the wound type reactant 50 were taken out from the reactor 42, and the surface was observed with an SEM photograph.

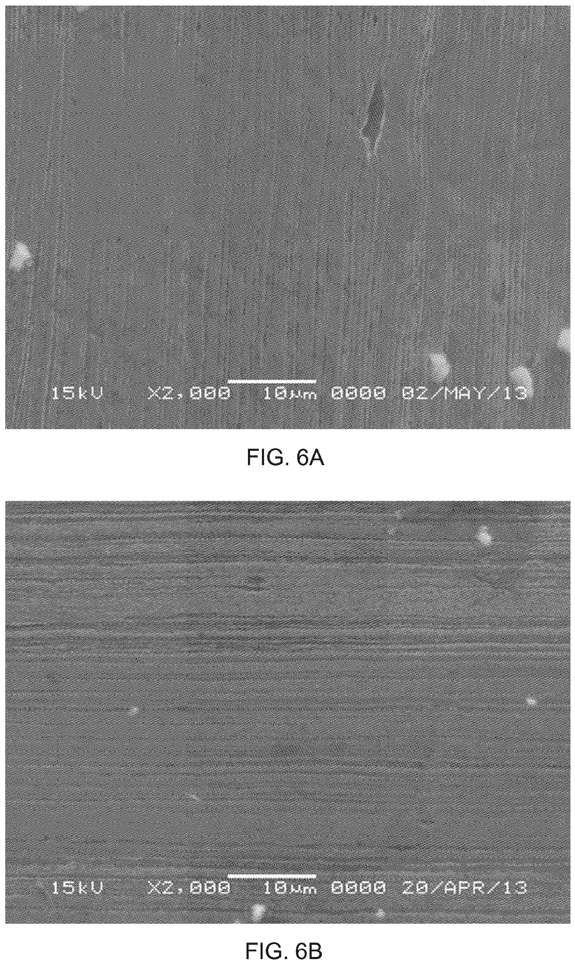

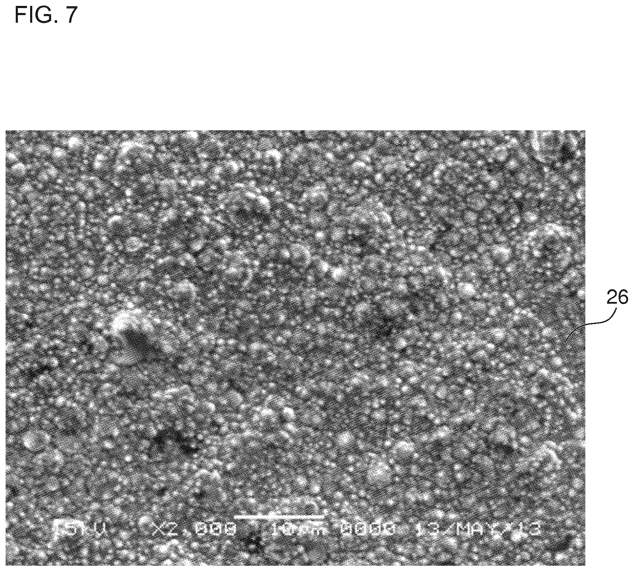

Here, Figure 6A is a SEM photograph showing the surface of the reactant 26, which was imaged before being submitted to the above described plasma treatment. It could be confirmed that a plurality of metal nanoparticles having the nano-size with a width of 1000 nm or smaller were not formed on the surface, and that the surface was flat. On the other hand, Figure 7 is an SEM photograph showing the surface of the reactant 26, which was imaged after having been submitted to the above described plasma treatment. It could be confirmed that a plurality of metal nanoparticles having the nano-size with the width of 1000 nm or smaller were formed on the surface, and that the surface became uneven. In addition, it could be confirmed that these metal nanoparticles had curved surfaces such as a hemispherical shape and a half-elliptic shape.

In addition, Figure 6B is an SEM photograph showing the surface of the thin wire 53 on the wound type reactant 50, which was imaged before being submitted to the above described plasma treatment. It could be confirmed that a plurality of metal nanoparticles having the nano-size with a width of 1000 nm or smaller were not formed on the surface also on the wound type reactant 50, and that the surface was flat. On the other hand, Figure 8 is an SEM photograph showing the surface of the thin wire 53 on the wound type reactant 50, which was imaged after having been submitted to the above described plasma treatment. It could be confirmed that a plurality of metal nanoparticles having the nano-size with the width of 1000 nm or smaller were formed on the surface, and that the surface became uneven. In addition, also in this case, it could be confirmed that the metal nanoparticles had curved surfaces such as the hemispherical shape and the half-elliptic shape. It was confirmed that the metal nanoparticles were formed so as to come in contact with each other on the surface of the thin wire 53 on the wound type reactant 50, though the number was not so many as that of the reactant 26, and that a region in which a plurality of metal nanoparticles were densely packed was also formed.

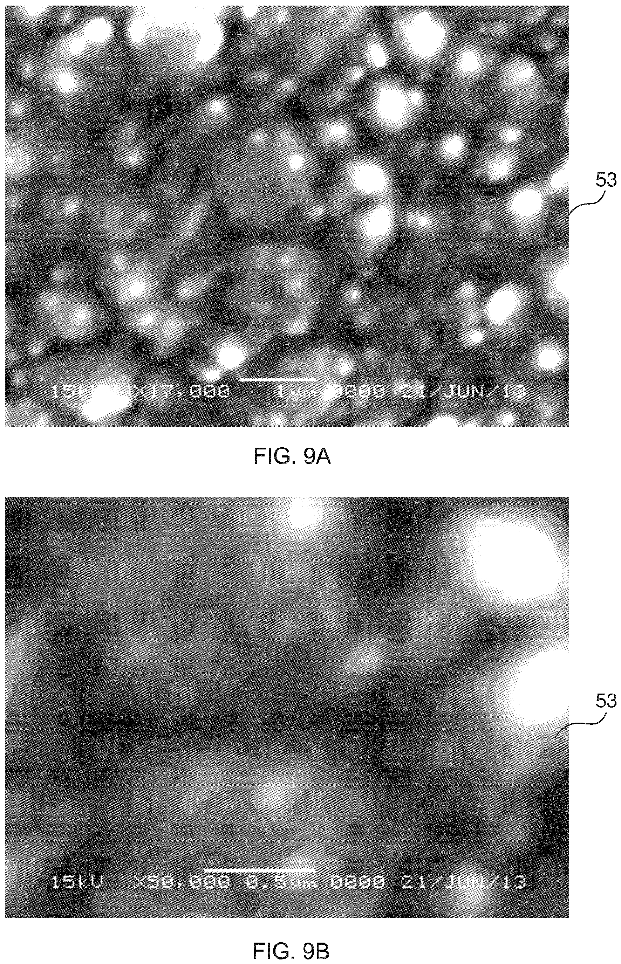

Here, the surface of the thin wire 53 on the wound type reactant 50 after the plasma treatment was further expanded and observed, and as a result, SEM photographs as shown in Figure 9A and Figure 9B were obtained. It could be confirmed from the Figure 9A and Figure 9B that the metal nanoparticle having width of 100 nm or smaller was formed, fine metal nanoparticles having further small width were formed on the surface of the metal nanoparticle, and as in the case or the like, the surface was formed to be the uneven shape. Incidentally, in this verification test, the wound type reactant 50 which had the thin wire 53 of Pd with a diameter of 0.1 mm wound around the supporting part 52 was used, but when the verification test was performed with the use of the wound type reactant which had a thin wire of Pd with a diameter of 1 mm wound around the supporting part 52, it could be confirmed that when the electric discharge was continued for 10 ks, and this operation was repeated 10 times, sufficiently active metal nanoparticles could be formed on the surface of the thin wire.

Subsequently, in this verification test, the inside of the reactor 42 was kept at the vacuum state; the wound type reactants 50 and 51 and the reactant 26 were heated at 100 to 200 °C for about 3 hours by an unillustrated heater, and were activated; protium, H₂O and besides hydrocarbon-based gases were emitted from the wound type reactants 50 and 51 and the reactant 26; and impurities were removed therefrom.

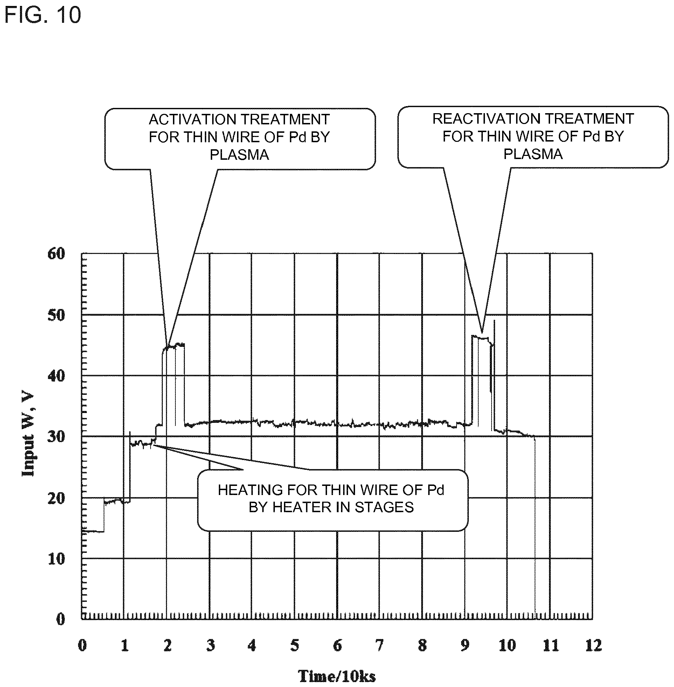

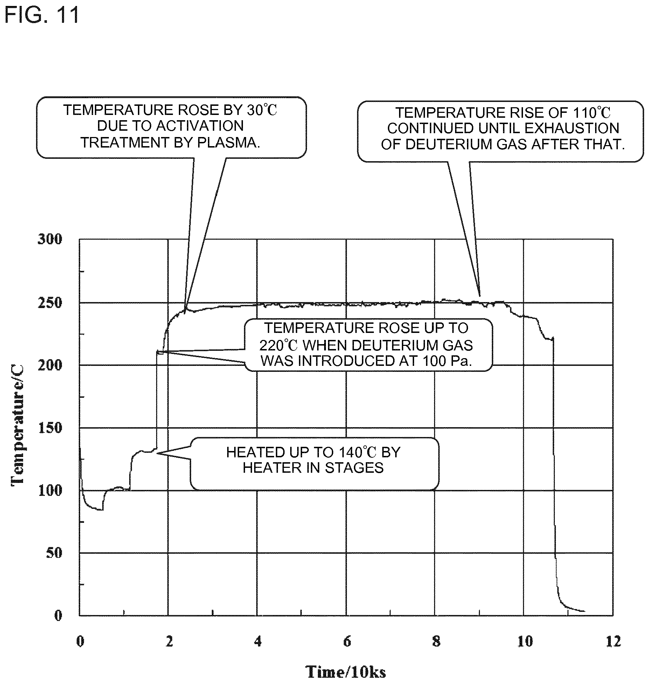

Subsequently, as for the exothermic reaction process, in the verification test of the heat-generating device 41 according to the second embodiment, as is shown in Figure 10 and Figure 11, the wound type reactant 50 was heated in stages while the vacuum state in the reactor 42 was kept, and when the room temperature difference reached 140 °C, the deuterium gas was introduced at 100 Pa from the gas supply pipe 8 into the reactor 42. Here, Figure 10 shows the voltage applied to the electrode pair, and Figure 11 shows the temperature of the wound type reactant 50 starting from the time when the wound type reactant 50 was heated by the heater in stages. The temperature shown in Figure 11 is a difference (room temperature difference) between the temperature of the wound type reactant 50 and room temperature.

In this verification test, as is shown in Figure 11, the wound type reactant 50 was heated to the room temperature difference of 140 °C in stages, and then the deuterium gas was supplied into the reactor 42 at 100 Pa(in other words, 100 ml). As a result, the room temperature difference immediately rose up to 220 °C, though the plasma was not generated by the electrode pair. After that, as is shown in Figure 10 and Figure 11, the voltage value to be applied to an electrode pair was raised to 45 V, and the activation treatment was performed by the plasma for 4000 seconds, in order to activate the surface of the thin wire 53 (referred to as thin wire of Pd in Figure 10) of the wound type reactant 50. As a result, the temperature further rose by 30 °C and became 250 °C. After that, the voltage value applied to the electrode pair was lowered to 32 V, and the plasma was stopped, but the state of the risen temperature stably continued until the deuterium gas was discharged from the reactor 42.

In addition, at this time, the neutron in the periphery of the reactor 42 was measured by the neutron measuring unit, and as a result, the neutron was measured in the neutron measuring unit from the time when the deuterium gas was introduced into the reactor 42 and the wound type reactant 50 began to generate heat. Thus, it can be assumed from the heat generation in the wound type reactant 50 and the measurement of the neutron that the nuclear fusion reaction occurs in the reactor 42. Incidentally, as is shown in Figure 10 and Figure 11, after the reactor became the state of stably generating heat at 250 °C, voltage was applied to the electrode pair to cause the glow discharge, and the activation treatment by the plasma was performed, in order to activate the surface of the thin wire 53 of the wound type reactant 50 again. However, further temperature rise could not be confirmed. From the above verification tests, it could be confirmed that in the heat-generating device 41 according to the second embodiment, the nuclear fusion reaction is caused and heat can be generated by an operation of: forming a plurality of metal nanoparticles having the nano-size on the surface of the wound type reactants 50 and 51 and the reactant 26; activating the resultant surface; and then supplying the deuterium gas into the reactor 42.

### (2-3) Operation and Effect

In the above structure, also in the heat-generating device 41 according to the present invention, the reactant 26 was provided in the reactor 42, which was formed from a hydrogen storage metal and had a plurality of metal nanoparticles having the nano-size formed on the surface, and the reactant 26 was heated with a heater to receive energy, the deuterium gas was supplied into the reactor 42 which was kept at the vacuum state, and the inside of the reactor 42 was controlled to the deuterium gas atmosphere. In addition, the heat-generating device 41 was structured so that a plurality of metal nanoparticles having the nano-size were formed also on the surfaces of the thin wire 53 of the wound type reactant 50, which was formed from the hydrogen storage metal, and of the wound type reactant 51. Thereby, in the heat-generating device 41, when energy is given by heating with the heater, hydrogen atoms are occluded in the metal nanoparticles of the wound type reactants 50 and 51 and the reactant 26; and the electrons in the metal nanoparticle are strongly influenced by surrounding metal atoms and other electrons, and act as heavy electrons. As a result, the internuclear distance between the hydrogen atoms in the metal nanoparticle is shrunk, the probability of causing the tunnel nuclear fusion reaction can be raised, and thus, the heat equal to or more than a heating temperature can be generated more stable than conventionally possible.

In addition, in this heat-generating device 41, when the plasma is generated by the electrode pair in the reactor to become a deuterium gas atmosphere, heat generation is promoted and the exothermic temperature further rises; and even if the plasma is stopped, the reactor 42 can continue to keep the state in which the temperature has risen, as long as the inside of the reactor 42 is kept at the deuterium gas atmosphere.

In addition, in the heat-generating device 41, the wound type reactant 51 is further provided in addition to the reactant 26 and the wound type reactant 50, a plurality of metal nanoparticles are formed also on this wound type reactant 51, accordingly the regions in which the metal nanoparticles are formed increase, correspondingly hydrogen atoms become easily occluded in the metal nanoparticle, and the probability at which the nuclear fusion reaction occurs can be enhanced.

### (3) Third embodiment

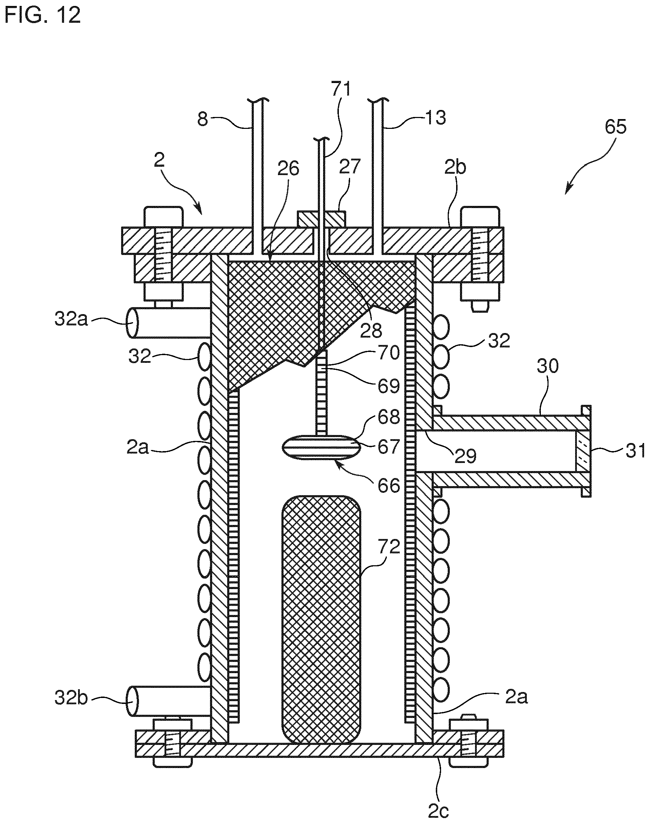

In Figure 12 in which the portions corresponding to those in Figure 1 are denoted by the same reference numerals and are shown, reference numeral 65 denotes a heat-generating device according to a third embodiment which is different from the above described first embodiment in the structure of the electrode pair that is installed in the reactor 2. Practically, in the reactor 2 in the present heat-generating device 65, a wound type reactant 66 which works, for instance, as an anode, and an inside reactant 72 which works as a cathode are arranged in series on the central axis of the reactor 2, and these wound type reactant 66 and the inside reactant 72 are arranged in a hollow region of the cylindrical reactant 26 which similarly works as the cathode.

In the case of the present embodiment, the reactant 26 is provided so as to be brought into contact with the inner wall of the cylindrical portion 2a, in the reactor 2, and also the inside reactant 72 is installed to stand on one wall part 2c. The reactor 2 has a structure in which a wire that is connected to an unillustrated electric power source is connected to the outer wall, and is structured so that when voltage is applied to the reactor 2 from the electric power source through the wire, the voltage is applied to the reactant 26 which contacts the reactor 2 and also to the inside reactant 72.

In the case of the present embodiment, the insulating member 27 is provided in the opening portion 28 of the wall part 2b, and a rod-shaped electrode introduction part 71 which is covered with an alumina insulating tube is held by the insulating member 27. The electrode introduction part 71 is in such a state that the insulating state to the reactor 2 is kept by the insulating member 27, the head thereof is arranged in the reactor 2 in the state, and the electrode introduction part 71 has the wound type reactant 66 on the head. The wound type reactant 66 has a shaft part 69 which is connected to the head of the electrode introduction part 71, and a thin wire 70 is spirally wound around the shaft part 69. In addition, as for the wound type reactant 66, a radially expanded supporting part 67 is provided at the head of the shaft part 69, and a thin wire 68 is wound also around the supporting part 67. The wire which is connected to the unillustrated electric power source is connected to the electrode introduction part 71, and a voltage can be applied to the wound type reactant 66 from the electric power source through the wire and the electrode introduction part 71.

Here, the shaft part 69 and the thin wires 68 and 70 which constitute the wound type reactant 66 are formed from a hydrogen storage metal including Ni, Pd, Ti, Pt and an alloy containing at least one element among the elements. Thereby, the plasma treatment is performed on the wound type reactant 66 similarly to the above described reactant 26, thereby a plurality of metal nanoparticles having the nano-size are formed on the surfaces of the shaft part 69 and the thin wires 68 and 70, also the surface oxide layers are removed, and the surfaces can become the activated state in which hydrogen atoms can be occluded. The supporting part 67 can be formed of a conducting member of Al₂O₃ (alumina ceramics) or the like, for instance.

In addition to such a structure, the inside reactant 72 has an inner part which is formed to be a hollow square pole shape, and the surface of the inside reactant 72 is formed to have a reticulated shape by the thin wire formed from a hydrogen storage metal including Ni, Pd, Ti, Pt and an alloy containing at least one element among the elements. The inside reactant 72 has a bottom part which adheres to the wall part 2c, becomes a conduction state with the reactor 2, and can work as an electrode when the voltage is applied thereto from the electric power source through the reactor 2. In addition, in the inside reactant 72, the top face part which opposes to the bottom part is arranged so as to face the supporting part 67 of the wound type reactant 66 at a predetermined distance; and the inside reactant 72 constitutes an electrode pair with the wound type reactant 66, causes the glow discharge, and can generate the plasma.

Here, the plasma treatment is performed also on the inside reactant 72 similarly to the reactant 26 and the wound type reactant 66, thereby a plurality of metal nanoparticles having the nano-size are formed on the surface, also the surface oxide layer is removed, and the surface can become the activated state in which hydrogen atoms can be occluded. In addition, in the heat-generating device 65, in addition to the inside reactant 72, the reactant 26 provided in the inner wall of the reactor 2 can also work as an electrode; the reactant 26 constitutes the electrode pair also with the wound type reactant 66; and the reactant 26 and the wound type reactant 66 also cause the glow discharge, and can generate the plasma.

In the above configuration, also in the heat-generating device 65, an effect similar to the above described second embodiment can be obtained. For instance, in the heat-generating device 65, the reactant 26 and the inside reactant 72 were provided in the reactor 2, which were formed from the hydrogen storage metal and had a plurality of metal nanoparticles having the nano-size formed on the surface, the reactant 26 and the inside reactant 72 were heated with a heater to receive energy, a deuterium gas was supplied into a reactor 42 which was kept at a vacuum state, and the inside of the reactor 42 was controlled to a deuterium gas atmosphere. Thereby, in the heat-generating device 65, hydrogen atoms are occluded in the metal nanoparticles of the reactant 26 and the inside reactant 72; and the electrons in the metal nanoparticle are strongly influenced by surrounding metal atoms and other electrons, and act as heavy electrons. As a result, the internuclear distance between the hydrogen atoms in the metal nanoparticle is shrunk, the probability of causing the tunnel nuclear fusion reaction can be raised, and thus heat can be generated more stable than conventionally possible.

In addition, the heat-generating device 65 has been structured so that a plurality of metal nanoparticles having the nano-size are formed also on the surfaces of the shaft part 69 and the thin wires 68 and 70 of the wound type reactant 66, which are formed from the hydrogen storage metal. Thereby, in the heat-generating device 65, when energy is given by heating with the heater, hydrogen atoms are occluded also in the metal nanoparticles on the surfaces of the shaft part 69 and the thin wires 68 and 70; and the electrons in the metal nanoparticle are strongly influenced by surrounding metal atoms and other electrons, and act as heavy electrons. As a result, the internuclear distance between the hydrogen atoms in the metal nanoparticle is shrunk, the probability of causing the tunnel nuclear fusion reaction can be raised, and thus heat can be generated more stable than conventionally possible.

### (4) Other embodiments

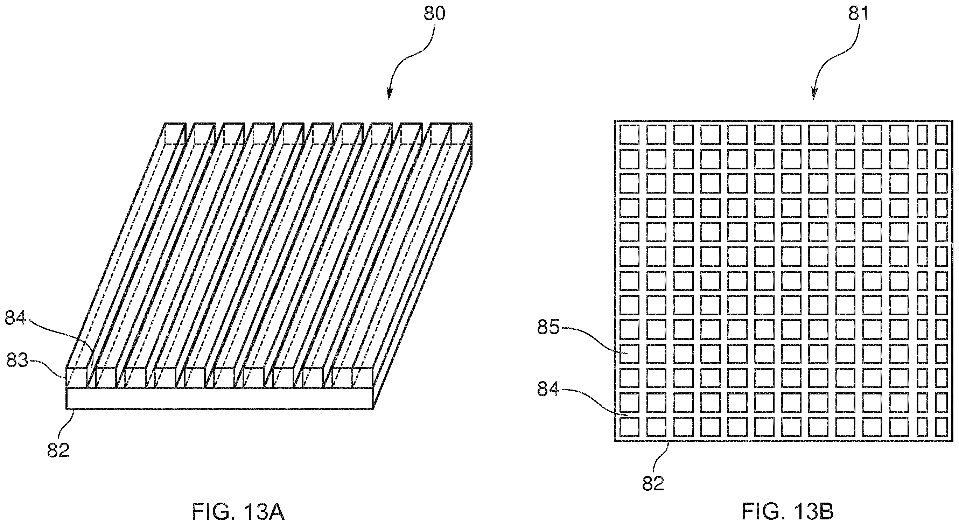

The present disclosure is not limited to the above described embodiments. For instance, in the above described embodiments, the metal nanoparticle has been described which has the curved surface and shows such a shape that a part of a spherical particle, an elliptical particle or an egg-shaped particle is embedded in the surface as a metal nano-protrusion. However, the present disclosure is not limited to the above shapes, and a strip-shaped metal nano-protrusion 83 having a nano-sized width may be applied, as is shown in Figure 13A, or a plate-shaped reactant 80 may also be applied, as is shown in Figure 13A.

In this case, the reactant 80 has a structure in which the strip-shaped metal nano-protrusions 83 that are formed from the hydrogen storage metal and have each a width of 1000 nm or smaller and strip-shaped depressions 84 are alternately arranged at fixed spaces, for instance, on a substrate 82 that is formed from the hydrogen storage metal and has a thickness of 0.5 mm. Such strip-shaped metal nano-protrusions 83 can be easily formed to be the strip shape having, for instance, the nano-size with a width of 5 nm, if an etching technology and the like are used. Thus, the metal nano-protrusions 83 may be formed on the surface of the reactant with the use of the etching technology and the like beforehand, before the reactant is installed in the reactor.

Then, the reactant 80 that is formed from the hydrogen storage metal and has a plurality of metal nano-protrusions 83 having the nano-size formed on the surface is installed in the reactor of which the inside becomes the deuterium gas atmosphere; thereby hydrogen atoms are occluded in the metal nano-protrusion 83 of the reactant 80; and the electrons in the metal nano-protrusion 83 are strongly influenced by surrounding metal atoms and other electrons, and act as heavy electrons. As a result, the internuclear distance between the hydrogen atoms in the metal nano-protrusion 83 is shrunk, the probability of causing the tunnel nuclear fusion reaction can be raised, and thus heat can be generated more stable than conventionally possible.

In addition, a reactant 81 may be applied as another embodiment, in which the depressions 84 formed in a lattice shape are formed on the substrate 82 that is formed from a hydrogen storage metal, and metal nano-protrusions 85, each of which has a cube shape with a width of 1000 nm or smaller and is formed from a hydrogen storage metal, are arranged in a matrix form, as is shown in Figure 13B. Also in this case, the reactant 81 that is formed from the hydrogen storage metal and has a plurality of metal nano-protrusions 85 having the nano-size formed on the surface is installed in the reactor of which the inside becomes the deuterium gas atmosphere; thereby hydrogen atoms are occluded in the metal nano-protrusion 85 of the reactant 81; and the electrons in the metal nano-protrusion 85 are strongly influenced by surrounding metal atoms and other electrons, and act as heavy electrons. As a result, the internuclear distance between the hydrogen atoms in the metal nano-protrusion 85 is shrunk, the probability of causing the tunnel nuclear fusion reaction can be raised, and thus heat can be generated more stable than conventionally possible.

Thus, the metal nano-protrusions are formed desirably so as to have a width of 1000 nm or smaller, preferably of 300 nm or smaller, more preferably of 10 nm or smaller, and further preferably of 5 nm or smaller, and the shape may be a strip shape, a rectangular shape and also other various shapes.

### (4-1) About use of heavy water gas, protium gas and light water gas

In the heat-generating devices 1, 41 and 65 according to the above described embodiments, the case was described where the deuterium (D₂) gas was supplied into the reactors 2 and 42 and the insides of the reactors 2 and 42 were controlled to the deuterium gas atmosphere, but the present invention is not limited to the case. It is acceptable to supply a heavy water (D₂O) gas into the reactors 2 and 42 and control the insides of the reactors 2 and 42 to the heavy water gas atmosphere; it is also acceptable to supply a protium (H₂) gas into the reactors 2 and 42 and control the insides of the reactors 2 and 42 to the protium gas atmosphere; and furthermore, it is also acceptable to supply a light water (H₂O) gas into the reactors 2 and 42 and control the insides of the reactors 2 and 42 to the light water gas atmosphere.

Specifically, even in the heat-generating device 1 (Figure 1) according to the first embodiment which uses the heavy water gas, the protium gas or the light water gas in place of the deuterium gas, when the exothermic reaction process is performed which generates the plasma in the wound type reactant 25 and the reactant 26, in the reactor 2 that has become the deuterium gas atmosphere, the protium gas atmosphere or the light water gas atmosphere, and which gives energy, the hydrogen atoms can be occluded in the metal nanoparticle of the reactant 26 or the wound type reactant 25. Thereby, in the heat-generating device 1, the electrons in the metal nanoparticle are strongly influenced by the surrounding metal atoms and other electrons, and act as heavy electrons. As a result, the internuclear distance between the hydrogen atoms in the metal nanoparticles is shrunk, and the probability of causing the tunnel nuclear fusion reaction can be raised.

In addition, also in the heat-generating device 41 (Figure 5) according to the second embodiment, the reactant 26 which is formed from the hydrogen storage metal and have a plurality of metal nanoparticles having the nano-size formed on the surface, and the wound type reactants 50 and 51 are installed in the reactor 42; the reactant 26 and the wound type reactants 50 and 51 are heated with a heater to receive energy; and the heavy water gas, the protium gas or the light water gas is supplied into the reactor 42 which is kept at the vacuum state. Thereby, also in the heat-generating device 41, the hydrogen atoms are occluded in the wound type reactants 50 and 51 and the metal nanoparticles of the reactant 26; and the electrons in the metal nanoparticle are strongly influenced by surrounding metal atoms and other electrons, and act as heavy electrons. As a result, the internuclear distance between the hydrogen atoms in the metal nanoparticles is shrunk, the probability of causing the tunnel nuclear fusion reaction can be raised, and thus, the heat equal to or more than a heating temperature can be generated more stable than conventionally possible.

Furthermore, also in the heat-generating device 41 according to the second embodiment, which uses the heavy water gas, the protium gas or the light water gas, when the plasma is generated by the electrode pair in the reactor 42 which is controlled to the heavy water gas atmosphere, the protium gas atmosphere or the light water gas atmosphere, after excess heat has been generated, similarly to the above description, heat generation is promoted, and the exothermic temperature further rises; and even if the plasma is stopped, the reactor 42 can continue to keep the state in which the temperature has risen, as long as the inside of the reactor 42 is kept at the heavy water gas atmosphere, the protium gas atmosphere or the light water gas atmosphere.

Furthermore, also in the heat-generating device 65 (Figure 12) according to the third embodiment, the heavy water gas, the protium gas or the light water gas can be used in place of the deuterium gas, and even if the heavy water gas, the protium gas or the light water gas is used, a similar effect to that in the above described second embodiment can be obtained. Specifically, also in the heat-generating device 65 shown in Figure 12, the reactant 26 and the inside reactant 72 are provided in the reactor 2, which are formed from the hydrogen storage metal and have a plurality of metal nanoparticles having the nano-size formed on the surface, the reactant 26 and the inside reactant 72 are heated with the heater to receive energy, and the heavy water gas, the protium gas or the light water gas is supplied into the reactor 42 which is kept at the vacuum state.

In the reactor 42 having the heavy water gas atmosphere, the protium gas atmosphere or the light water gas atmosphere therein, the hydrogen atoms are occluded in the metal nanoparticles of the reactant 26 and the inside reactant 72; the electrons in the metal nanoparticle are strongly influenced by the surrounding metal atoms and other electrons, and act as heavy electrons. As a result, the internuclear distance between the hydrogen atoms in the metal nanoparticles is shrunk, the probability of causing the tunnel nuclear fusion reaction can be raised, and thus heat can be generated more stable than conventionally possible.

In addition, also in such a heat-generating device 65 which uses the heavy water gas, the protium gas or the light water gas, a plurality of metal nanoparticles having the nano-size can be also formed on the surfaces of the shaft part 69 and the thin wires 68 and 70 of the wound type reactant 66, which are formed from the hydrogen storage metal; and when energy is given by heating with the heater, the hydrogen atoms are occluded in the metal nanoparticles on the surfaces of the shaft part 69 and the thin wires 68 and 70, the electrons in the metal nanoparticles are strongly influenced by the surrounding metal atoms and other electrons, and act as heavy electrons. As a result, the internuclear distance between the hydrogen atoms in the metal nanoparticles is shrunk, the probability of causing the tunnel nuclear fusion reaction can be raised, and thus heat can be generated more stable than conventionally possible.

### (4-2) About the verification test by using deuterium gas, heavy water gas, light water gas and protium gas

Next, a verification test was performed for examining output total energy and the like, at the time when the heat-generating device 41 having a structure illustrated in Figure 5 was used, and when the deuterium gas, the heavy water gas, the light water gas and the protium gas were used. Here, as for the heat-generating device 41 which was used for the verification test, the reactant 26 was prepared which was a net of 100 mesh formed by a thin wire that had a diameter of 0.05 mm and was formed from Ni (99.9% purity), and had a height of 30 cm and a width of 30 cm, and was installed so that the outer circumferential surface of the reactant 26 came in close contact with the inner wall of the reactor 42. In this stage, a plurality of metal nanoparticles having the nano-size are not formed on the surface of the cylindrical reactant 26.

In addition, in this verification test, the wound type reactant 50 was used which had the thin wire 53 that had a diameter of 0.2 mm and a length of 1000 mm and was formed from Pd (99.9% purity) wound 15 times around the supporting part 52 that had a width of 30 mm and a thickness of 2 mm and is formed from Al₂O₃ (alumina ceramics). Furthermore, in this verification test, the wound type reactant 51 was used which had the thin wire 61 that was formed from Pd (99.9% purity) and had a diameter of 1 mm and a length of 300 mm spirally wound without any gap, around the shaft part 60 that was formed from Pd (purity of 99.9%) and had a diameter of 3 mm and a length of 50 mm.

Subsequently, these wound type reactants 50 and 51 and the reactant 26 were cleaned ultrasonically with an alcohol and acetone, and were installed in the reactor 42 while having kept the cleaned state so that contamination with oil did not occur. The whole of this reactor 42 is set at the ground potential. In addition, a K type and stainless steel cover type of a thermocouple which had a diameter of 1.6 mm and a length of 300 mm was used as the thermocouple 58 for directly measuring the temperature of the wound type reactant 50; the outside of the outer coating of the stainless steel was further insulated by an alumina pipe having a diameter of 3 mm and a length of 100 mm; and the head portion was brought into contact with the surface of the wound type reactant 50. In the wound type reactants 50 and 51 which form an electrode pair, the polarity of an anode and a cathode can be changed.

Subsequently, first of all, as the plasma treatment, gas in the reactor 42 was evacuated, the inside of the reactor 42 was controlled to a vacuum atmosphere of several Pa, then the wound type reactant 50 was set at the anode, the other wound type reactant 51 was set at the cathode, the direct current voltage of 600 to 800 V was applied, and the electric discharge was generated by approximately 20 mA, for approximately 600 seconds. Next, the electrode voltage was changed, the wound type reactant 50 was set at the cathode, the other wound type reactant 51 was set at the anode, the direct current voltage of 600 to 800 V was applied, and the electric discharge was generated by approximately 20 to 30 mA for approximately 10³ to 10⁴ seconds.

Subsequently, in the verification test, the inside of the reactor 42 was kept at the vacuum state; and the wound type reactants 50 and 51 and the reactant 26 were heated by an unillustrated heater, and were activated, as the plasma treatment. The wound type reactants 50 and 51 and the reactant 26 were heated until the wound type reactants 50 and 51 and the reactant 26 become not to emit protium, H₂O and besides hydrocarbon-based gases. Specifically, the wound type reactants 50 and 51 and the reactant 26 were heated at 100 to 200 °C for about 3 hours by a heater, and were activated; protium, H₂O and besides hydrocarbon-based gases were emitted from the wound type reactants 50 and 51 and the reactant 26; and impurities were removed therefrom.

Furthermore, in this verification test, as the plasma treatment, the wound type reactant 50 was set at the anode, the direct current voltage of 600 to 800 V was applied, and the electric discharge was generated by approximately 20 to 30 mA for approximately 10 ks. Thus, a plurality of metal nanoparticles having the nano-size were formed on the surfaces of the wound type reactants 50 and 51 and the reactant 26. After such plasma treatment, the deuterium gas was supplied into the reactor 42, and the gas pressure in the reactor 42 was examined, and as a result, it was confirmed that the gas pressure decreased to 40 Pa from 170 Pa. From this, it was confirmed that the wound type reactants 50 and 51 and the reactant 26 which were the sample metal absorbed 6.5 cm³ of the deuterium gas.

In addition, by using the wound type reactants 50 and 51 and the reactant 26 which had such a plurality of metal nanoparticles having the nano-size formed on the surfaces, the exothermic reaction process was performed which caused the nuclear fusion reaction in the reactor 42. In the verification test, the exothermic reaction process was performed, while the inside of the reactor 42 was kept at the vacuum state, and the type of gases supplied into the reactor 42 by a gas supply unit 3, the gas pressure at the time when the gas is supplied and the input heating wattage of the heater which heats the electrode pair were changed; and various numerical values such as the temperature of the reactor 42 were examined. Here, at first, a result obtained when the deuterium gas was used as the gas to be supplied into the reactor 42 is shown in the following Table 1.

**[Table 1]**

| **No.** | **Gas** | **Input** | **Output/W** | | **Time** | **Hout/Hin** | | **Temperature/C** | | **Input Energy** | **Output** | **Output** |
|---|---|---|---|---|---|---|---|---|---|---|---|---|
| | **Pressure** | | **Electrode** | **Reactor** | **ks** | **Electrode** | **Reactor** | **Electrode** | **Reactor** | | **Electrode** | **Reactor** |
| | **Pa** | **Watt** | | | | | | | | **kJ** | **kJ** | **kJ** |
| **1** | 330 | 45.8 | 68 | 69 | 60 | 1.48 | 1.51 | 325 | 64 | 2,748 | 4,080 | 4,140 |
| **2** | 330 | 51.2 | 58 | 80 | 8 | 1.13 | 1.56 | 298 | 70 | 410 | 464 | 640 |
| **3** | 300 | 62.4 | 85 | 113 | 10 | 1.36 | 1.81 | 365 | 80 | 624 | 850 | 1,130 |
| **4** | 430 | 81.5 | 100 | 91.5 | 23 | 1.22 | 1.12 | 410 | 80 | 1,875 | 2,300 | 2,105 |
| **5** | 260 | 80.5 | 105 | 87.5 | 2 | 1.3 | 1.09 | 390 | 95 | 161 | 210 | 175 |
| **6** | 425 | 45.9 | 79 | 53.5 | 90 | 1.72 | 1.17 | 316 | 65 | 4,131 | 7,110 | 4,815 |
| **7** | 440 | 46.2 | 79 | 58 | 155 | 1.71 | 1.26 | 315 | 62 | 7,161 | 12,245 | 8,990 |
| **8** | 410 | 46.2 | 79 | 55 | 250 | 1.71 | 1.19 | 318 | 63 | 11,550 | 19,750 | 13,750 |
| **9** | 390 | 46 | 79 | 55 | 330 | 1.71 | 1.2 | 315 | 63 | 15,180 | 26,070 | 18,150 |
| **10** | 380 | 46 | 79 | 53 | 500 | 1.71 | 1.2 | 314 | 62 | 23,000 | 39,500 | 26,500 |
| **11** | 370 | 45.9 | 80 | 56.5 | 556 | 1.74 | 1.23 | 315 | 63 | 25,520 | 44,480 | 31,414 |
| **12** | 350 | 45.9 | 80 | 58.5 | 640 | 1.74 | 1.27 | 314 | 63 | 29,376 | 51,200 | 37,440 |
| **13** | 350 | 45.4 | 79 | 52.5 | 640 | 1.74 | 1.16 | 313 | 63 | 29,056 | 50,560 | 33,600 |
| **14** | 260 | 81 | 120 | 110 | 13 | 1.48 | 1.36 | 385 | 79 | 1,053 | 1,560 | 1,430 |
| **15** | 170 | 81 | 105 | 96 | 70 | 1.29 | 1.19 | 313 | 84 | 5,670 | 7,350 | 6,720 |

In Table 1, "No." of the first column is a test number, "Gas Pressure Pa" of the second column is a gas pressure (Pa) of the deuterium gas, "Input Watt" of the third column is the input heating wattage (W) of the heater, "Output/W Electrode" of the fourth column is a heat output (W) calculated from the temperature of the electrode (wound type reactant 50), and "Output/W Reactor" of the fifth column is a heat output (W) calculated from the temperature of the reactor 42.

In addition, in Table 1, "Time ks" of the sixth column is excess heat duration time (ks), "Hout/Hin Electrode" of the seventh column is a value of an output/input ratio calculated from the temperature of the electrode (wound type reactant 50), "Hout/Hin Reactor" of the eighth column is an output/input ratio calculated from the temperature of the outer wall of the reactor 42, "Temperature/C Electrode" of the ninth column is a steady temperature (°C) of the electrode (wound type reactant 50) during the test, "Temperature/C Reactor" of the tenth column is a steady temperature (°C) of the reactor 42 during the test, "Input Energy kJ" of the eleventh column is input total energy (kJ), "Output Electrode kJ" of the twelfth column is output total energy (kJ) calculated from the temperature of the electrode (wound type reactant 50), and "Output Reactor kJ" of the thirteenth column is output total energy (kJ) calculated from the temperature of the outer wall of the reactor 42.

Test numbers No. 6 to No. 13 show results of a series of tests. It was confirmed from Table 1 that the output total energy (the twelfth column and the thirteenth column) larger than the input total energy (the eleventh column) was obtained in any case of having used the deuterium gas, generation of the excess heat could be observed, and the heat could be generated by the heat-generating device 41.

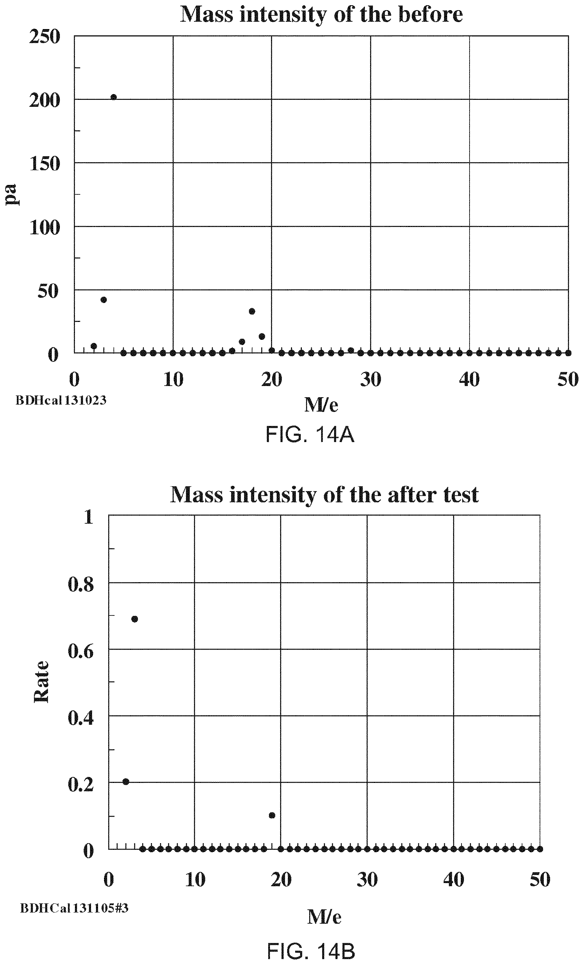

Next, in the heat-generating device 41, the gas components were examined before and after the heat generation having occurred when the deuterium gas was used. Figure 14A is a result of a mass spectrometry of the deuterium gas which is a source gas, and shows the result in which the mass number of the gas M/e is shown on a horizontal axis, and the gas components in the reactor 42 is shown on a vertical axis by a partial pressure. From the value of the partial pressure, a volume 5 1 of the reactor 42, a temperature and a pressure, a gas volume in the normal state of the deuterium gas as shown in Figure 14A was obtained. As is shown in Figure 14A, the deuterium gas which is a source gas mainly contains deuterium, and the mass number 4 was 202 Pa. In addition, as for other contents, HD⁺ with the mass number of 3 was 42 Pa, and H₂⁺ with the mass number of 2 was 5 Pa. As impurities, the mass number 18 which is assumed to be H₂O⁺ or OD⁺ was included. The mass number 17 is assumed to be OH⁺, the mass number 19 to be OHD⁺, and the mass number 20 to be OD₂⁺.

Next, the exothermic reaction process was performed in the heat-generating device 41, and the gas components in the reactor 42 after the exothermic reaction process was examined. Here, in the exothermic reaction process, the electrode (wound type reactant 50) was heated for about 84 ks with a heater, while the deuterium gas was supplied into the reactor 42 in the evacuated state. At this time, an input into the heater was set at 46 W for the first 7 ks, and was set at 81 W after that. In the meantime, the gas was exhausted from the reactor 42 several times, but excess heat was continuously generated.

Figure 14B shows the result of the examination of the gas components in the reactor 42 for 10 ks after the above described exothermic reaction process has been performed (in other words, after the electrode heating with the heater has been completed, and hereafter referred to as after end of test as well). From Figure 14B, after the end of the test, HD⁺ of which the mass number is 3 increased, and secondly, H₂⁺ of which the mass number is 2 and OHD⁺ of which the mass number is 19 increased.

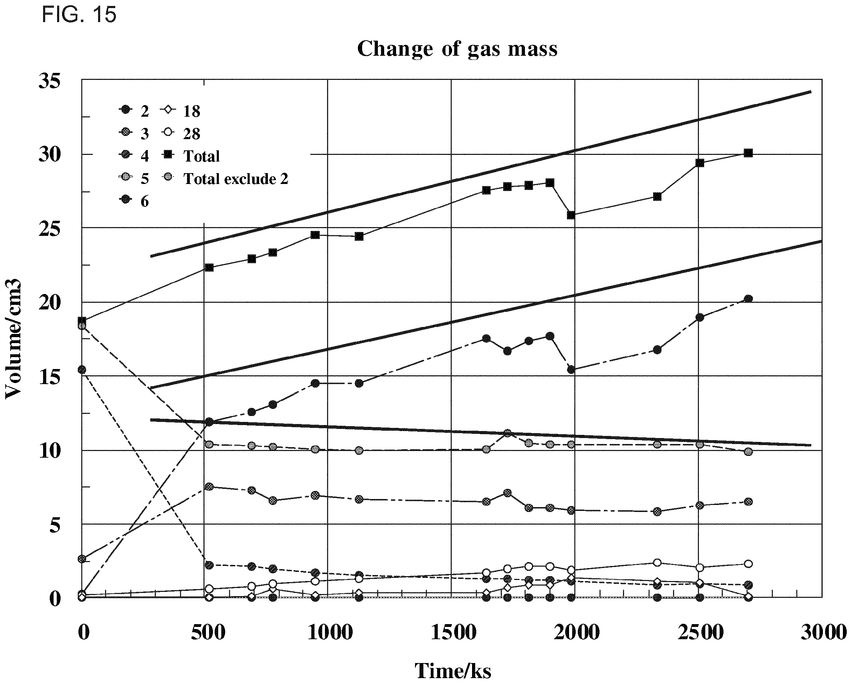

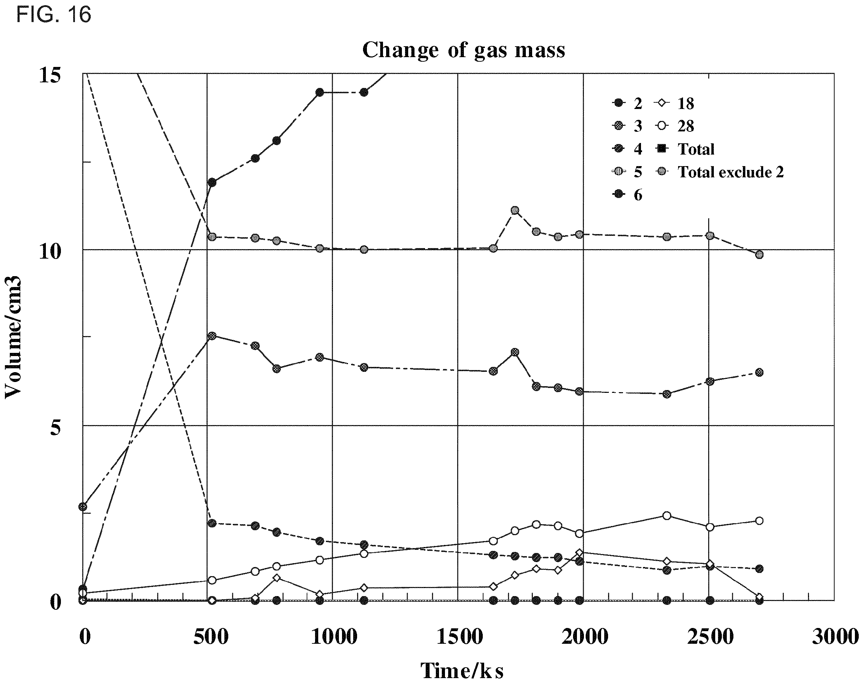

Then, in order to more correctly identify the gas components, the heat generation test was performed in the heat-generating device 41 for 30 days by using the deuterium gas. Figure 15 and Figure 16 show the result of the measurement in which the change in the gas components during the test is expressed along the passage of the test time. In Figure 15 and Figure 16, a horizontal axis shows the passage of time and a vertical axis shows a gas volume; and Figure 16 is a graph in which the region of the gas volume 15 cm³ or less in Figure 15 is expanded. "Total exclude 2" in Figure 15 and Figure 16 shows the total gas volume. The excess heat was 15 W in the minimum value for the input of 80 W. If the elapsed time is multiplied by 15 W, exothermic energy, in other words, joule is obtained. From the above relation, when the elapsed time is 2.7 Ms, 40 MJ can be obtained from the calculation.

As is shown in Figure 15 and Figure 16, the mass number 4 of which the component is mainly deuterium (D₂⁺) decreased immediately after the start of the verification test, and after that, a decreasing speed was lowered, but the mass number 4 linearly decreased with the elapsed time. On the other hand, the mass number 2 which was assumed to be a deuterium atom (D⁺) increased, which was the reverse of the mass number 4 (D₂⁺). The dissociation energy of such a molecule of hydrogen was 436 kJ/mol at 25 °C, and the degree of dissociation was approximately 1.0×10⁻⁷ at 1000 °C. In addition, even if the heating by a heater for the reactant 26 formed from nickel was stopped, gas of the mass stably existed.

After the start of the verification test, the mass number 3 increased in reverse correlation to the mass reduction of the mass number 2, but after that, the mass number 3 decreased correspondingly to the behavior of the mass number 4. In addition, the mass number 28 also increased with time and the quantity was 2.3 cm³ in 30 days. Other components did not almost change. The total of components other than the mass number 2 was almost constant after the first change. In addition, the mass number 3 (HD⁺) and the mass number 4 (D⁺) both depended on the gas pressure and the output total energy, but each tendency was in reverse. The mass number 3 increased when the gas pressure and the output total energy increased, but the mass number 4 decreased when the gas pressure and the output total energy increased. The tendencies mean that the mass number 4 contributes to the generation of the mass number 2 and the mass number 3. It has been found from the verification test that as the output total energy is larger, the amount of generated mass number 2 (H₂⁺) increases, but does not depend on the gas pressure of the deuterium gas, and on the other hand, that the mass number 3 (HD⁺) increases according to the increase of the gas pressure and heating value of the deuterium gas.

In addition, the output energy and the like in the heat-generating device 41 were examined by using the heavy water gas in place of the deuterium gas, and the result as shown in the following Table 2 was obtained.

**[Table 2]**

| ELECTRODE MATERIAL | | PRESSURE/Pa | INPUT/W | | | AMOUNT OF GENERATED HYDROGEN | | TEST TIME /ks | OUTPUT/INPUT RATIO | | TEMPERATURE/°C | | TOTAL INPUT/kj | OUTPUT / kj | |
|---|---|---|---|---|---|---|---|---|---|---|---|---|---|---|---|
| ANODE + | CATHODE - | | HEATER | PLASMA | TOTAL | CALCULATED FROM POLE Pd | CALCULATED FROM POLEN | | Pd | Ni | POLE Pd | POLE Ni | | Pd | Ni |
| Pd | Ni | 150 | 44.6 | 0 | | | 50 | 1.2 | 0.82 | 1.13 | 190 | 50 | | | 60 |
| Pd | Ni | 150 | 30.7 | 13.9 | 44.6 | 61 | 48 | 2.8 | 1.37 | 1.08 | 260 | 60 | 125 | 171 | 134 |
| Pd | Ni | 120 | 45.8 | 16.6 | 62.4 | 62 | 62 | 2.48 | 1 | 1.2 | 320 | 70 | 155 | 154 | 154 |
| Pd | Ni | 120 | 30.7 | 0 | 30.7 | 51 | 33 | 7 | 1.65 | 1.08 | 240 | 43 | 215 | 357 | 231 |
| Pd | Ni | 215 | 31 | 0 | 31 | 58 | 35 | 58 | 1.87 | 1.13 | 260 | 55 | 1,798 | 3,364 | 2,030 |
| Pd | Ni | 50 | 31 | 0 | 31 | 46 | 34 | 78 | 1.48 | 1.07 | 200 | 52 | 2,418 | 3,588 | 2,652 |
| Pd | Ni | 100 | 45.7 | 0 | 45.7 | 53 | 55 | 65 | 1.15 | 1.19 | 275 | 51 | 2,971 | 3,445 | 3,575 |
| Pd | Ni | 145 | 45.9 | 0 | 45.9 | 67 | 60 | 150 | 1.3 | 1.31 | 300 | 60 | 6,885 | 10,050 | 9,000 |

In the heat-generating device 41 which was used for this verification test, the other wound type reactant 51 was formed from Ni, which was formed from Pd in the above described verification test, the wound type reactant 50 formed from Pd was used as the anode and the wound type reactant 51 formed from Ni was used as the cathode; the heavy water gas was supplied into the reactor 42; and the wound type reactants 50 and 51 and the reactant 26 were heated with a heater. In addition, the plasma was generated by the glow discharge in the reactor 42, as needed. Then, the output energy and the like in the heat-generating device 41 at this time were measured.

In Table 2, the pole Pd means the wound type reactant 50 and the pole Ni shows the wound type reactant 51. From Table 2, it could be confirmed that in the heat-generating device 41, in any case where the heavy water gas was used, when the exothermic reaction process was performed in which the wound type reactants 50 and 51 and the reactant 26 were heated with the heater in the reactor 42 under the heavy water gas atmosphere, the output energy exceeding the input energy was obtained, and heat was generated. It could be also confirmed that in the heat-generating device 41, hydrogen was generated when the exothermic reaction process was performed, as is shown in "the amount of generated hydrogen" of the seventh row and the eighth row in Table 2.

Here, the result of the verification test performed in the heat-generating device 41 is shown in the following Table 3, in which the wound type reactants 50 and 51 that became the electrode pair were formed from Pd, and the deuterium gas, the heavy water gas or the light water gas was used as a source gas to be supplied into the reactor 42.

**[Table 3]**

| **No.** | **Gas** | | **Power in/W** | | | | **Time** | **Heat out/W** | | **Hout/Hin** | |
|---|---|---|---|---|---|---|---|---|---|---|---|
| | **Component** | **Pressure** | **Heat Watt** | **Plasma** | | **Total** | **ks** | **Estimated by Electrode temp.** | **Estimated by reactor temp.** | **Estimated by Electrode temp.** | **Estimated by reactor temp.** |
| | **Significant** | **Pa** | **W** | **V** | **W** | | | | | | |
| **1** | D₂O | 70 | 30.7 | 0 | 0 | 30.7 | 7 | 51 | 33 | 1.65 | 1.08 |
| **2** | D₂O | 70 | 30.7 | 780 | 13.9 | 44.6 | 2.8 | 61 | 48 | 1.37 | 1.08 |
| **3** | D₂O | 275 | 31 | 0 | 0 | 31 | 58 | 58 | 35 | 1.87 | 1.13 |
| **4** | D₂O | 50 | 31 | 0 | 0 | 31 | 78 | 46 | 34 | 1.48 | 1.07 |
| **5** | D₂O | 50 | 31 | 0 | 0 | 31 | 13 | 43 | 31 | 138 | 0.997 |
| **6** | D₂O | 100 | 45.7 | 0 | 0 | 45.7 | 65 | 53 | 55 | 1.15 | 1.19 |
| **7** | D₂O | 20 | 44.6 | 0 | 0 | 44.6 | 1.2 | 36 | 50 | 0.82 | 1.13 |
| **8** | D₂O | 50 | 45.8 | 790 | 16.6 | 62.4 | 2.48 | 62 | 62 | 1 | 1.2 |
| **9** | D₂O | 50 | 46.6 | 772 | 14.6 | 61.2 | 1.44 | 60 | 60 | 1 | 1.3 |
| **10** | D₂O | 50 | 47 | 0 | 0 | 47 | 1.17 | 55 | 55 | 1.28 | 1.43 |
| **11** | D₂O | 145 | 45.9 | 0 | 0 | 45.9 | 150 | 67 | 60 | 1.3 | 1.31 |
| **12** | D₂ | 330 | 45.8 | 0 | 0 | 45.8 | 62.5 | 68 | 69 | 1.48 | 1.51 |
| **13** | H₂O | 20 | 46 | 0 | 0 | 46 | 8.2 | 46 | 70 | 1 | 1.09 |
| **14** | D₂ | 400 | 49 | 770 | 12 | 61 | 6.5 | 66 | 70 | 1.08 | 1.15 |
| **15** | D₂ | 200 | 49 | 0 | 0 | 49 | 1.3 | 61 | 60 | 1.24 | 1.22 |
| **16** | D₂ | 300 | 25 | 0 | 0 | 25 | 6.5 | 41 | 30 | 1.64 | 1.2 |
| **17** | D₂ | 300 | 36 | 0 | 0 | 36 | 1.5 | 54 | 48 | 1.5 | 1.33 |
| **18** | D₂ | 330 | 36 | 0 | 0 | 36 | 2.8 | 54 | 44 | 1.5 | 1.22 |
| **19** | D₂ | 330 | 51.2 | 0 | 0 | 51.2 | 8 | 58 | 80 | 1.13 | 1.56 |
| **20** | H₂O | 20 | 35.5 | 0 | 0 | 35.5 | 60 | 42 | 42 | 1.18 | 1.18 |
| **23** | H₂O | 180 | 61.8 | 0 | 0 | 61.8 | 63.2 | 78 | 110 | 1.26 | 1.78 |
| **24** | H₂O | 25 | 61 | 0 | 0 | 61 | 643 | 45 | 78 | 0.73 | 1.28 |
| **25** | D₂ | 140 | 61 | 0 | 0 | 61 | 18.2 | 70 | 110 | 1.15 | 1.8 |
| **26** | D₂ | 200 | 61.3 | 0 | 0 | 61.3 | 143 | 85 | 111 | 139 | 1.81 |
| **27** | D₂ | 300 | 62.4 | 0 | 0 | 62.4 | 11 | 100 | 65 | 1.6 | 1.04 |
| **28** | D₂ | 370 | 62.4 | 821 | 22.7 | 85.1 | 4.5 | 120 | 95 | 1.41 | 1.12 |
| **29** | D₂ | 365 | 62.4 | 846 | 22.7 | 85.1 | 3.6 | 120 | 105 | 1.41 | 1.23 |
| **31** | D₂ | 430 | 81.5 | 0 | 0 | 81.5 | 22.5 | 100 | 91.5 | 1.22 | 1.12 |
| **32** | D₂ | 260 | 80.5 | 0 | 0 | 80.5 | 2.08 | 105 | 87.5 | 1.3 | 1.09 |
| **33** | D₂ | 140 | 0 | 0 | 0 | 0 | 2 | 0.04 | | | |
| **34** | D₂ | 222 | 45 | 0 | 0 | 45 | 17.5 | 61 | 46 | 1.36 | 1.02 |
| **35** | D₂ | 427 | 46.2 | 0 | 0 | 46.2 | 62 | 80 | 50 | 1.58 | 1.08 |
| **36** | D₂ | 425 | 45.9 | 0 | 0 | 45.9 | 27 | 79 | 53.5 | 1.72 | 1.17 |
| **37** | D₂ | 438 | 46.2 | 0 | 0 | 46.2 | 62 | 79 | 58 | 1.71 | 1.26 |
| **38** | D₂ | 408 | 46.2 | 0 | 0 | 46.2 | 93.4 | 79 | 55 | 1.71 | 1.19 |
| **39** | D₂ | 391 | 46 | 0 | 0 | 46 | 85.9 | 79 | 55 | 1.71 | 1.2 |
| **40** | D₂ | 382 | 46 | 0 | 0 | 46 | 162 | 79 | 53 | 1.71 | 1.2 |
| **41** | D₂ | 367 | 45.9 | 0 | 0 | 45.9 | 62 | 80 | 56.5 | 1.74 | 1.23 |
| **42** | D₂ | 348 | 45.9 | 0 | 0 | 45.9 | 81.4 | 80 | 58.5 | 1.74 | 1.27 |
| **43** | D₂ | 348 | 45.4 | 0 | 0 | 45.4 | 2.2 | 79 | 52.5 | 1.74 | 1.16 |
| **44** | D₂ | 260 | 81 | 0 | 0 | 81 | 13.1 | 120 | 110 | 1.48 | 1.36 |
| **45** | D₂ | 170 | 81 | 0 | 0 | 81 | 67 | 105 | 96 | 1.29 | 1.19 |

In Table 3, "Gas Component Significant" of the second column shows the type of the used gas, "Gas Pressure Pa" of the third column shows the gas pressure at the time when the gas is supplied into the reactor 42, "Power in/W Heat Watt W" of the fourth column shows the input heating wattage (W) by the heater at the time when the wound type reactants 50 and 51 and the reactant 26 are heated, "Power in/W Plasma V" of the fifth column shows the input voltage value at the time when the plasma discharge is generated by the wound type reactants 50 and 51 which become electrodes, "Power in/W Plasma W" of the sixth column shows the input wattage at the time when the plasma discharge is generated by the wound type reactants 50 and 51 which become the electrode pair, and "Power in/W Total" of the seventh column shows all the input wattage in which the heating wattage input by the heater is added to the wattage input into the electrode pair at the time of the plasma discharge.

In addition, in Table 3, "Time ks" of the eighth column shows the duration time of the excess heat, "Heat out/W Estimated by Electrode temp" of the ninth column shows the heating value calculated from the temperature of the electrode (wound type reactant 50), "Heat out/W Estimated by reactor temp" of the tenth column shows the heating value calculated from the temperature of the outer wall of the reactor 42, "Hout/Hin Estimated by Electrode temp" of the eleventh column shows an output/input ratio calculated on the basis of the temperature of the electrode (wound type reactant 50), and "Hout/Hin Estimated by reactor temp" of the twelfth column shows an output/input ratio calculated on the basis of the temperature of the outer wall of the reactor 42.

In Sample No. 33 using the deuterium gas, the plasma discharge was not performed and the heating for the electrode pair by a heater was not also performed. In this case, it could be confirmed that the excess heat did not occur, from the output/input ratio of the eleventh column and the twelfth column.

On the other hand, it could be confirmed that in other samples, the excess heat occurred, from the output/input ratio of the eleventh column and the twelfth column. It could be confirmed that in the heat-generating device 41, the excess heat was generated in the exothermic reaction process when the wound type reactants 50 and 51 and the reactant 26 were heated by a heater, even if not only the deuterium gas but also the heavy water gas or the light water gas was supplied into the reactor 42 to have controlled the inside of the reactor 42 to the heavy water gas atmosphere or the light water gas atmosphere.

Next, the result of the verification test at the time when the protium (H₂) gas was used in the heat-generating device 41 is shown in Table 4. In this case, the plasma treatment was performed on the same conditions as those at the time when the wound type reactants 50 and 51 were formed from Ni, the wound type reactants 50 and 51 were set at the electrode pair, and the result of the above described Table 1 was obtained. Subsequently, the exothermic reaction process was performed in the heat-generating device 41, and as a result, the result as shown in Table 4 was obtained.

**[Table 4]**

| NUMBER | GAS COMPONENT | PRESSURE | INPUT/W | TIME/ks | INSIDE TEMPERATURE CALCULATION | REACTOR TEMPERATURE CALCULATION | INSIDE TEMPERATURE CALCULATION | REACTOR TEMPERATURE CALCULATION |
|---|---|---|---|---|---|---|---|---|
| **1** | H₂ | 20 | 44.6 | 1.2 | 36 | 50 | 0.82 | 1.1 |
| **2** | H₂ | 20 | 46 | 8.2 | 46 | 70 | 1 | 1.1 |
| **3** | H₂ | 20 | 35.5 | 60 | 42 | 42 | 1.2 | 1.2 |
| **4** | H₂ | 25 | 61 | 64.3 | 45 | 78 | 0.73 | 1.3 |

In Table 4, the "pressure" of the third column shows the gas pressure (Pa) at the time when the protium gas is supplied into the reactor 42, "input/W" of the fourth column shows the input heating wattage (W) by a heater at the time when the wound type reactants 50 and 51 and the reactant 26 are heated, "Time/ks" of the fifth column shows the duration time of the excess heat, "inside temperature calculation" of the sixth column shows a heating value calculated from the temperature (°C) in the reactor 42, and "reactor temperature calculation" of the seventh column shows a heating value calculated from the temperature (°C) of the reactor 42 itself. In addition, in Table 4, "inside temperature calculation" of the eighth column shows an output/input ratio calculated on the basis of the heating value calculated from the temperature in the reactor 42, and "reactor temperature calculation" of the ninth column shows an output/input ratio calculated on the basis of the heating value calculated from the temperature of the reactor 42 itself.

Also from Table 4, it could be confirmed that the excess heat was generated when the inside of the reactor 42 was controlled to the protium gas atmosphere, and the wound type reactants 50 and 51 and the reactant 26 in the reactor 42 were heated by a heater in this state, because at least one of output/input ratios of "inside temperature calculation" of the eighth column and "reactor temperature calculation" of the ninth column becomes 1 or higher.

As described above, from Table 1 to Table 4, it could be confirmed that the heat-generating device 41 could generate heat equal to or more than the heating temperature, by the operation of: providing the wound type reactants 50 and 51 and the reactant 26 which were formed from the hydrogen storage metal and had a plurality of metal nanoparticles having the nano-size formed on the surfaces by the plasma treatment, in the reactor 42; controlling the inside of the reactor 42 which was kept at the vacuum state to the deuterium gas atmosphere, the heavy water gas atmosphere, the protium gas atmosphere or the light water gas atmosphere; and heating the wound type reactants 50 and 51 and the reactant 26 with a heater to give energy. (4-3) Reactants according to other embodiments

In the heat-generating device 1 shown in Figure 1, the heat-generating device 41 shown in Figure 5 and the heat-generating device 65 shown in Figure 12, a plurality of metal nanoparticles having the nano-size are formed as metal nano-protrusions on the surfaces of the reactants 26, 80 and 81 which have reticulated shapes formed by the thin wires. However, it is also acceptable, for instance, to deposit a hydrogen storage metal of Ni, Pd, Pt or Ti having a fine particle shape (hereafter referred to as fine particle body of hydrogen storage metal) which is smaller than the metal nanoparticle (metal protrusion), on the surfaces of metal nanoparticles on the surfaces of the reactants 26, 80 and 81, and form the surface of the metal nanoparticle to be in an uneven state by the fine particle bodies of the hydrogen storage metal.

For instance, when the metal nanoparticles (metal nano-protrusion) are formed according to the above described "(1-2) plasma treatment", and then the plasma is generated under the condition of the pressure of 1 to 50 Pa in the hydrogen gas atmosphere, a part of other electrodes formed from a hydrogen storage metal is chipped and can be scattered in the reactors 2 and 42, as the fine particle body of the hydrogen storage metal. The scattered fine particle body of the hydrogen storage metal is deposited on the surfaces of the metal nanoparticles on the surfaces of the reactants 26, 80 and 81, and can form the surfaces of the metal nanoparticles into a finely uneven state. Thus, the above described heat-generating devices 1, 41 and 65 are structured so that the fine particle bodies of the hydrogen storage metal deposit on the surfaces of the metal nanoparticles, and thereby hydrogen atoms can be occluded also in the fine particle bodies of the hydrogen storage metal. In the metal nanoparticle having the fine particle bodies of the hydrogen storage metal deposited on the surface, even in the fine particle body of the hydrogen storage metal, the electrons are strongly influenced by the surrounding metal atoms and other electrons, and act as heavy electrons. As a result, the internuclear distance between the hydrogen atoms in the fine particle body of the hydrogen storage metal is shrunk, the probability of causing the tunnel nuclear fusion reaction can be further remarkably raised, and thus, the heat can be generated more stable than conventionally possible.

For instance, the heat-generating device 1 shown in Figure 1 shall have a structure in which the reactant 26 that becomes one electrode is formed from Ni, Pd, Pt or the like, and the shaft part 35 and the thin wire 36 (Figure 2) of the wound type reactant 25 that becomes the other electrode are formed from Ni, Pd, Pt or the like. In the heat-generating device 1 shown in Figure 1, when the plasma is generated in the reactor 2, for instance, a part of the wound type reactant 25 which is one of the electrode pair is chipped and scattered in the reactor 2 as the fine particle bodies of the hydrogen storage metal, and the microscopically fine particle bodies of the hydrogen storage metal formed from Ni, Pd or the like can be deposited on the surface of the metal nanoparticle of the surface of the reactant 26. Thereby, the heat-generating device 1 becomes a structure in which on the surfaces of the metal nanoparticles formed from Ni or the like, a plurality of the fine particle bodies of the hydrogen storage metal formed from the same Ni or different type of Pd or the like are deposited; the surface of the reactant 26 further remarkably progresses to a more finely uneven state; the probability of causing the tunnel nuclear fusion reaction is further remarkably raised in the subsequent exothermic reaction process; and thus heat can be generated more stable than conventionally possible.

In addition, the heat-generating device 41 shown in the Figure 5 shall have a structure in which, for instance, the reactant 26 is formed from Ni, Pd, Pt or the like, and the thin wires 53 and 61 of the wound type reactants 50 and 51 are formed from Ni, Pd, Pt or the like. In the heat-generating device 41 shown in Figure 5, when the plasma is generated in the reactor 42, a part of the wound type reactants 50 and 51 which becomes the electrode pair is chipped and scattered in the reactor 42 as the fine particle bodies of the hydrogen storage metal, and the microscopically fine particle bodies of the hydrogen storage metal formed from Pd can be deposited on the surface of the metal nanoparticle of the surface of the reactant 26. Thereby, the heat-generating device 41 becomes a structure in which on the surfaces of the metal nanoparticles formed from Ni or the like, a plurality of the fine particle bodies of the hydrogen storage metal formed from the same Ni or different type of Pd or the like are deposited; the surface of the reactant 26 further remarkably progresses to a more finely uneven state; the probability of causing the tunnel nuclear fusion reaction can be further remarkably raised in the subsequent exothermic reaction process; and thus heat can be generated more stable than conventionally possible.

In addition, the heat-generating device 65 shown in the Figure 12 shall have a structure in which the reactant 26 that becomes one electrode is formed from Ni, Pd, Pt or the like, and the shaft part 69, the supporting part 67 and the thin wires 68 and 70 of the wound type reactant 66 that becomes the other electrode are formed from the hydrogen storage metal such as Ni, Pd and Pt. The inside reactant 72 in the heat-generating device 65 may be formed from the same hydrogen storage metal as that of the reactant 26 among the hydrogen storage metals such as Ni, Pd and Pt, may be formed from the same hydrogen storage metal as that of the wound type reactant 66, or may be formed from the hydrogen storage metal different from those of the reactant 26 and the wound type reactant 66.

In the heat-generating device 65 shown in Figure 12, when the plasma is generated in the reactor 2, for instance, a part of the reactant 26, the wound type reactant 66 or the inside reactant 72 is chipped and scattered in the reactor 2 as the fine particle bodies of the hydrogen storage metal, the microscopically fine particle bodies of the hydrogen storage metal formed from Ni, Pd or the like can be deposited on each surface of the metal nanoparticles of the reactant 26, the wound type reactant 66 and the inside reactant 72. Thereby, the heat-generating device 65 becomes a structure in which on the surfaces of the metal nanoparticles formed from Ni or the like, a plurality of fine particle bodies of the hydrogen storage metal formed from the same Ni, different types of Pd or the like are deposited; each surface of the reactant 26, the wound type reactant 66 and the inside reactant 72 further remarkably progresses to a more finely uneven state; the probability of causing the tunnel nuclear fusion reaction is further remarkably raised in the subsequent exothermic reaction process; and thus heat can be generated more stable than conventionally possible.

The metal nanoparticle having the fine particle bodies of the hydrogen storage metal formed on the surface, which are finer than the metal nanoparticle, may be previously formed on the surfaces of the reactants 26, 80 and 81, the wound type reactants 25, 50, 51 and 66, and the inside reactant 72, with the use of a CVD (chemical vapor deposition) method or a sputtering method before the reactants 26, 80 and 81, the wound type reactants 25, 50, 51 and 66, and the inside reactant 72 are installed in the reactor.

### Reference Signs List

1, 41 and 65 heat-generating device
2 and 42 reactor
3 gas supply unit
26, 80 and 81 reactant
72 inside reactant (reactant)
25, 50, 51 and 66 wound type reactant (reactant)

## Claims

1. A heat-generating device comprising:
a reactor (42);
a wound type reactant (50) installed in the reactor (42), the wound type reactant (50) having a structure in which a thin wire (53) which is formed from a hydrogen storage metal is spirally wound around a supporting part (52);
a heater configured for heating the wound type reactant (50),
an evacuation unit (10) by which a gas in the reactor (42) is exhausted to the outside, and
a gas supply unit (3) configured for supplying any of a deuterium gas, a heavy water gas, a protium gas and a light water gas as a reactant gas into the reactor (42); wherein
the wound type reactant (50) is configured as an electrode for generating a plasma in the reactor (42), **characterised in that** a plurality of metal nano-protrusions are present on a surface of the thin wire (53), each metal nano-protrusion has a nano-size of 1000 nm or less and is formed of a hydrogen storage metal;
wherein the metal nano-protrusions are configured to occlude hydrogen atoms due to generation of the plasma in the reactor (42) or heating of the wound type reactant (50), thus generating heat,
wherein the reactor (42) includes a cylindrical portion (43a) with opening portions at both ends and wall parts (43b, 43c),
wherein the wall parts (43b, 43c) block the opening portions through a gasket to form an enclosed space,
wherein a third opening portion (45) and a visual recognition opening portion (29) are provided facing each other on the lateral surface of the cylindrical portion (43a); and
a cylindrical pipe communicating portion (46) is provided having one end bonded to the lateral surface of the cylindrical portion (43a) so that a hollow region of the pipe communicating portion (46) communicates with the third opening portion (45), and
a third wall part (47) is provided on the other end of the pipe communicating portion (46); and
a gas supply pipe (8), an evacuation pipe (13), and a pipe for measuring a pressure are provided in the third wall part (47),
the wound type reactant (50) being arranged in the reactor so as to face the third opening portion (45) and the visual recognition portion (29) and being configured such that the gas sent from the pipe communicating portion (46) can directly be propelled to the wound type reactant (50) .

2. The heat-generating device according to claim 1, further comprising:
a second reactant (26) formed of a thin wire formed of a hydrogen storage metal to have a reticulated shape, the second reactant (26) is arranged along an inner wall of the reactor (2), and is installed so as to cover the inner wall, wherein
a plurality of metal nano-protrusions are present on a surface of the thin wire of the second reactant (26), each metal nano-protrusion has a nano-size of 1000 nm or smaller, and the plurality of metal nano-protrusions are configured to occlude hydrogen atoms due to the generation of the plasma in the reactor (2) or heating of the second reactant (26), wherein
the second reactant (26) constitutes an electrode pair with the wound type reactant (50), and the electrode pair is configured so as to be capable of generating the plasma.

3. The heat-generating device according to claim 2, wherein
the second reactant (26) has a hollow region, and
a third reactant (72) is provided inside the hollow region, the third reactant (72) is formed of a hydrogen storage metal, and a plurality of metal nano-protrusions are present on the surface of the third reactant (72) having a nano-size of 1000 nm or less.

4. The heat-generating device according to claim 1, further comprising:
a second wound type reactant (51) arranged in the reactor (42) so as to face the wound type reactant (50), having a structure in which a second thin wire (61) formed of a hydrogen storage metal is spirally wound on a shaft part (60) that is formed of a hydrogen storage metal, wherein
a plurality of metal nano-protrusions are formed on a surface of the second thin wire (61) of the second wound type reactant (51) and the shaft part (60), each metal nano-protrusion has a nano-size of 1000 nm or smaller, and the plurality of metal nano-protrusions occlude hydrogen atoms due to the generation of the plasma in the reactor (42) or heating of the second wound type reactant (51), wherein
the second wound type reactant (51) constitutes an electrode pair with the wound type reactant (50), and the electrode pair is configured so as to be capable of generating the plasma.

5. A heat-generating method using a heat-generating device according to at least one of the preceding claims, the method comprising the following steps:
setting in the reactor (42) a pressure of 10 to 500 Pa by evacuating a gas in the reactor (42);
supplying a reactant gas to the reactor by directly propelling the gas to the wound type reactant (50);
applying a voltage of 600 to 1000 V to the wound type reactant (50), thus generating plasma by glow discharge in the reactor (42) or heating the wound type reactant (50), which results in occluding hydrogen atoms in the metal nano-protrusions, thus generating heat.

## Patentansprüche

1. Wärmeerzeugende Vorrichtung, umfassend:
einen Reaktor (42);
einen gewickelten Reaktanten (50), der im Reaktor (42) installiert ist, wobei der gewickelte Reaktant (50) eine Struktur hat, bei der ein dünner Draht (53), der aus einem wasserstoffspeichernden Metall gebildet ist, spiralförmig um einen Stützteil (52) gewickelt ist;
einen Heizer, der dafür ausgelegt ist, den gewickelten Reaktanten (50) zu erwärmen,
eine Evakuierungseinheit (10), durch die ein Gas im Reaktor (42) nach außen abgegeben wird, und
eine Gaszufuhreinheit (3), die zum Zuführen von einem Gas aus einem Deuteriumgas, einem Schwerwassergas, einem Protiumgas und einem Leichtwassergas als Reaktionsgas zum Reaktor (42) ausgelegt ist; wobei
der gewickelte Reaktant (50) als Elektrode zum Erzeugen eines Plasmas im Reaktor (42) ausgelegt ist,
**dadurch gekennzeichnet, dass**
eine Vielzahl von Metall-Nanovorsprüngen auf einer Oberfläche des dünnen Drahtes (53) vorhanden ist, wobei jeder Metall-Nanovorsprung eine Nanogröße von 1000 nm oder weniger hat und aus einem wasserstoffspeichernden Metall gebildet ist;
wobei die Metall-Nanovorsprünge dafür ausgelegt sind, Wasserstoffatome aufgrund der Erzeugung des Plasmas im Reaktor (42) oder der Erwärmung des gewickelten Reaktanten (50) zu absorbieren, wodurch Wärme erzeugt wird,
wobei der Reaktor (42) einen zylindrischen Teil (43a) mit Öffnungsteilen an beiden Enden und Wandteilen (43b, 43c) enthält,
wobei die Wandteile (43b, 43c) die Öffnungsteile durch eine Dichtung blockieren, um einen geschlossenen Raum zu bilden,
wobei ein dritter Öffnungsteil (45) und ein Sichterkennungs-Öffnungsteil (29) vorgesehen sind, die auf der seitlichen Fläche des zylindrischen Teils (43a) einander gegenüberliegen; und es ist ein Zylinderrohr-Kommunikationsteil (46) vorgesehen, bei dem ein Ende mit der Seitenfläche des zylindrischen Teils (43a) verbunden ist, sodass ein hohler Bereich des Rohr-Kommunikationsteils (46) mit dem dritten Öffnungsteil (45) kommuniziert, und ein dritter Wandteil (47) ist am anderen Ende des Rohr-Kommunikationsteils (46) vorgesehen; und
ein Gasversorgungsrohr (8), ein Evakuierungsrohr (13) und ein Rohr zum Messen eines Drucks sind im dritten Wandteil (47) vorgesehen,
wobei der gewickelte Reaktant (50) im Reaktor derart angeordnet ist, dass er dem dritten Öffnungsteil (45) und dem Sichterkennungsteil (29) gegenüberliegt und derart ausgelegt ist, dass das Gas, das vom Rohr-Kommunikationsteil (46) gesendet wird, direkt zum gewickelten Reaktanten (50) getrieben wird.

2. Wärmeerzeugende Vorrichtung nach Anspruch 1, die ferner umfasst:
einen zweiten Reaktanten (26), der aus einem dünnen Draht gebildet ist, welcher aus einem wasserstoffspeichernden Metall erzeugt wird, der eine Netzform besitzt; der zweite Reaktant (26) ist entlang einer Innenwand des Reaktors (2) angeordnet und ist so installiert, dass er die Innenwand bedeckt, wobei
eine Vielzahl von Metall-Nanovorsprüngen auf einer Fläche des dünnen Drahtes des zweiten Reaktanten (26) vorhanden ist, jeder Metall-Nanovorsprung hat eine Nanogröße von 1000 nm oder weniger, und die Vielzahl von Metall-Nanovorsprüngen ist dafür ausgelegt, Wasserstoffatome aufgrund der Erzeugung des Plasmas im Reaktor (2) oder der Erwärmung des zweiten Reaktanten (26) zu absorbieren, wobei
der zweite Reaktant (26) ein Elektrodenpaar mit dem gewickelten Reaktanten (50) darstellt, und das Elektrodenpaar ist dafür ausgelegt, das Plasma erzeugen zu können.

3. Wärmeerzeugende Vorrichtung nach Anspruch 2, wobei der zweite Reaktant (26) einen hohlen Bereich aufweist, und ein dritter Reaktant (72) ist im Innern des hohlen Bereichs vorgesehen, der dritte Reaktant (72) wird aus einem wasserstoffspeichernden Metall gebildet, und eine Vielzahl von Metallen-Nanovorsprüngen ist auf der Oberfläche des dritten Reaktanten (72) vorhanden, die eine Nanogröße von 1000 nm oder weniger haben.

4. Wärmeerzeugende Vorrichtung nach Anspruch 1, die ferner umfasst:
einen zweiten gewickelten Reaktanten (51), der im Reaktor (42) angeordnet ist, sodass er dem gewickelten Reaktanten (50) gegenüberliegt, wobei er eine Struktur hat, bei der ein zweiter dünner Draht (61), der aus einem wasserstoffspeichernden Metall gebildet ist, spiralförmig auf einen Schaftteil (60) gewickelt ist, der aus einem wasserstoffspeichernden Metall gebildet ist, wobei eine Vielzahl von Metall-Nanovorsprüngen auf einer Fläche des zweiten dünnen Drahtes (61) des zweiten gewickelten Reaktanten (51) und das Schaftteils (60) gebildet ist, jeder Metall-Nanovorsprung hat eine Nanogröße von 1000 nm oder weniger, und die Vielzahl von Metall-Nanovorsprüngen absorbiert Wasserstoffatome aufgrund der Erzeugung des Plasmas im Reaktor (42) oder der Erwärmung des zweiten gewickelten Reaktanten (51), wobei
der zweite gewickelte Reaktant (51) stellt ein Elektrodenpaar mit dem gewickelten Reaktanten (50) dar, und das Elektrodenpaar ist dafür ausgelegt, das Plasma erzeugen zu können.

5. Wärmeerzeugendes Verfahren, das eine wärmeerzeugende Vorrichtung nach mindestens einem der vorherigen Ansprüche verwendet, wobei das Verfahren die folgenden Schritte umfasst:
Einstellen, im Reaktor (42), eines Drucks von 10 bis 500 Pa durch Evakuieren eines Gases im Reaktor (42);
Zuführen eines Reaktionsgases zum Reaktor durch direktes Vorantreiben des Gases zum gewickelten Reaktanten (50);
Anlegen einer Spannung von 600 bis 1000 V an den gewickelten Reaktanten (50), dadurch Erzeugen von Plasma durch Glühentladung im Reaktor (42) oder Erwärmen des gewickelten Reaktanten (50), was zur Absorption von Wasserstoffatomen in den Metall-Nanovorsprüngen führt, damit Erzeugen von Wärme.

## Revendications

1. Dispositif générateur de chaleur, comprenant :
un réacteur (42) ;
un réactif de type enroulé (50) installé dans le réacteur (42), le réactif de type enroulé (50) présentant une structure dans laquelle un fil fin (53) constitué d'un métal de stockage d'hydrogène est enroulé en spirale autour d'une partie de support (52) ;
un dispositif de chauffage configuré pour chauffer le réactif de type enroulé (50),
une unité d'évacuation (10) destinée à évacuer un gaz présent dans le réacteur (42) vers l'extérieur, et
une unité d'alimentation en gaz (3) configurée pour fournir l'un quelconque parmi un deutérium gazeux, un gaz à eau lourde, un gaz protium et un gaz à eau légère, comme gaz réactif dans le réacteur (42) ; où
le réactif de type enroulé (50) est configuré comme une électrode pour la production d'un plasma dans le réacteur (42),
**caractérisé en ce que**
une pluralité de nano-saillies métalliques sont disposées sur une surface du fil fin (53), chaque nano-saillie métallique présentant une nano-taille de 1000 nm ou moins, et étant constituée d'un métal de stockage d'hydrogène ;
dans lequel les nano-saillies métalliques sont configurées pour occlure des atomes d'hydrogène en raison de la production de plasma dans le réacteur (42) ou du chauffage du réactif de type enroulé (50),
dans lequel le réacteur (42) comprend une partie cylindrique (43a) avec des parties ouvertes aux deux extrémités et des parties de paroi (43b, 43c),
dans lequel les parties de paroi (43b, 43c) bloquent les parties ouvertes par le biais d'un joint d'étanchéité pour former un espace fermé,
dans lequel une troisième partie ouverte (45) et une partie d'ouverture de reconnaissance visuelle (29) sont disposées l'une en face de l'autre sur la surface latérale de la partie cylindrique (43a) ; et
il est prévu une partie de communication de tuyau cylindrique (46) avec une extrémité reliée à la surface latérale de la partie cylindrique (43a), de telle façon qu'une région creuse de la partie de communication de tuyau (46) communique avec la troisième partie ouverte (45), et
une troisième partie de paroi (47) est disposée à l'autre extrémité de la partie de communication de tuyau (46) ; et
un tuyau d'alimentation en gaz (8), un tuyau d'évacuation (13) et un tuyau destiné à mesurer une pression sont disposés dans la troisième partie de paroi (47),
le réactif de type enroulé (50) est disposé dans le réacteur de manière à être tourné vers la troisième partie ouverte (45) et la partie d'ouverture de reconnaissance visuelle (29), et configuré de telle façon que le gaz envoyé depuis la partie de communication de tuyau (46) peut être propulsé directement vers le réactif de type enroulé (50).

2. Dispositif générateur de chaleur selon la revendication 1, comprenant en outre :
un deuxième réactif (26) constitué d'un fil fin constitué d'un métal de stockage d'hydrogène pour avoir une forme réticulée, le deuxième réactif (26) étant disposé le long d'une paroi intérieure du réacteur (42), et étant installé de manière à couvrir la paroi intérieure, dans lequel
une pluralité de nano-saillies métalliques sont disposées sur une surface du fil fin du deuxième réactif (26), chaque nano-saillie métallique présente une nano-taille de 1000 nm ou moins, et la pluralité de nano-saillies métalliques sont configurées de manière à occlure des atomes d'hydrogène en raison de la production de plasma dans le réacteur (42) ou du chauffage du deuxième réactif (26), dans lequel
le deuxième réactif (26) constitue une paire d'électrodes avec le réactif de type enroulé (50), et la paire d'électrodes est configurée de manière à pouvoir produire le plasma.

3. Dispositif générateur de chaleur selon la revendication 2, dans lequel
le deuxième réactif (26) comporte une région creuse, et
un troisième réactif (72) est disposé à l'intérieur de la région creuse, le troisième réactif (72) est constitué d'un métal de stockage d'hydrogène, et une pluralité de nano-saillies métalliques sont disposées sur la surface du troisième réactif (72) et présentent une nano-taille de 1000 nm ou moins.

4. Dispositif générateur de chaleur selon la revendication 1, comprenant en outre :
un deuxième réactif de type enroulé (51) disposé dans le réacteur (42) de manière à se trouver en face du réactif de type enroulé (50), présentant une structure dans laquelle un deuxième fil fin (61) constitué d'un métal de stockage d'hydrogène est enroulé en spirale sur une partie d'arbre (60) constituée d'un métal de stockage d'hydrogène, dans lequel une pluralité de nano-saillies métalliques sont formées sur une surface du deuxième fil fin (61) du deuxième réactif de type enroulé (51) et la partie d'arbre (60), chaque nano-saillie métallique présente une nano-taille de 1000 nm ou moins, et la pluralité de nano-saillies métalliques occluent des atomes d'hydrogène en raison de la production de plasma dans le réacteur (42) ou du chauffage du deuxième réactif de type enroulé (51), dans lequel
le deuxième réactif de type enroulé (51) constitue une paire d'électrodes avec le réactif de type enroulé (50), et la paire d'électrodes est configurée de manière à pouvoir produire le plasma.

5. Procédé de génération de chaleur au moyen d'un dispositif générateur de chaleur selon l'une au moins des revendications précédentes, le procédé comprenant les étapes suivantes :
réglage dans le réacteur (42) d'une pression de 10 à 500 Pa en évacuant un gaz dans le réacteur (42) ;
introduction d'un gaz réactif dans le réacteur en propulsant le gaz directement vers le réactif de type enroulé (50) ;
application d'une tension de 600 à 1000 V au réactif de type enroulé (50), produisant ainsi du plasma par décharge luminescente dans le réacteur (42) ou par chauffage du réactif de type enroulé (50), ce qui résulte dans l'occlusion d'atomes d'hydrogène dans les nano-saillies métalliques, générant ainsi de la chaleur.
